Europäisches Patentamt

European Patent Office

Office européen des brevets

(19)

(11) EP 0 693 841 B1

(12) **FASCICULE DE BREVET EUROPEEN**

(45) Date de publication et mention
de la délivrance du brevet:
**04.12.2002 Bulletin 2002/49**

(51) Int Cl.⁷: **H04L 12/56**, H04Q 11/04

(21) Numéro de dépôt: **95401712.5**

(22) Date de dépôt: **19.07.1995**

(54) **Réservation de débit dans des noeuds de commutation d'un réseau asynchrone**

Bandbreitenreservierung in Vermittlungsstellen eines asynchronen Netzes

Bandwidth reservation in switching nodes of an asynchronous network

(84) Etats contractants désignés:
**BE DE ES GB IT NL SE**

(30) Priorité: **21.07.1994 FR 9409146**

(43) Date de publication de la demande:
**24.01.1996 Bulletin 1996/04**

(73) Titulaire: **FRANCE TELECOM**
**75015 Paris (FR)**

(72) Inventeurs:
• **Boyer, Pierre**
  **F-22300 Lannion (FR)**

• **Mangin, Christophe**
  **F-22700 Louannec (FR)**
• **Servel, Michel**
  **F-22300 Lannion (FR)**

(74) Mandataire: **Cabinet Martinet & Lapoux**
**BP 405**
**78055 Saint Quentin en Yvelines Cédex (FR)**

(56) Documents cités:
**EP-A- 0 413 488       EP-A- 0 535 860**
**CA-A- 2 112 756**

## Description

La présente invention concerne de manière générale un protocole de réservation de ressource dans un réseau temporel asynchrone dit ATM, signifiant "Asynchronous Transfer Mode" en terminologie anglosaxone.

Dans un réseau asynchrone, les ressources sont partagées dans le temps entre plusieurs terminaux d'usager. Des unités de données, appelées cellules, se suivent sans référence temporelle de position les unes par rapport aux autres. Des identificateurs de voies d'acheminement connectant respectivement différents terminaux d'usager sont portés par les cellules. Contrairement à la technique temporelle synchrone, aucun intervalle de temps prédéterminé n'est assigné aux cellules d'une voie d'acheminement. Un terminal d'usager choisit un débit de cellules à transmettre, sans en référer directement au réseau, le débit de bits instantané entre le terminal et le réseau étant toujours conservé.

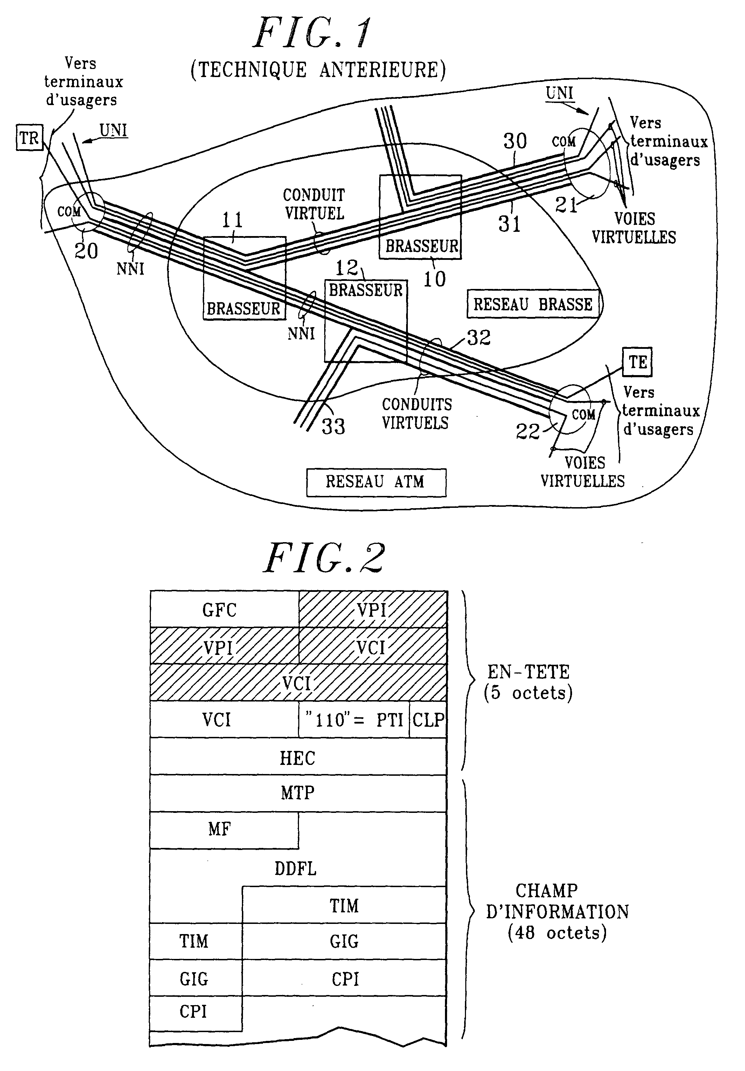

Selon les exploitants de réseaux de télécommunications, le développement des réseaux ATM sera effectué en deux étapes. Ces deux étapes sont représentées schématiquement à la figure 1. Au cours d'une première étape, un exploitant de réseaux fournira un réseau "brassé" offrant un service de liaison spécialisée à chaque terminal d'usager. Une seconde étape verra naître le réseau "commuté" final qui interconnectera tous les terminaux d'usager entre eux.

Le réseau brassé sera destiné à satisfaire rapidement une clientèle professionnelle très demandeuse en communications avec des débits élevés. Le réseau brassé est constitué de brasseurs 10, 11 et 12 qui aiguillent des voies virtuelles d'acheminement dans un conduit virtuel 30, 31, 32, 33 vers un autre conduit virtuel selon la liaison spécialisée considérée. Plusieurs terminaux d'usager se partagent un même conduit virtuel qui relie deux brasseurs prédéterminés.

La seconde étape résultera de l'adjonction à cette infrastructure de réseau brassé, de commutateurs ATM 20, 21 et 22 qui commuteront véritablement des voies virtuelles entre conduits virtuels entrants et sortants des commutateurs. Dans le cadre de cette seconde étape, l'offre ne se limitera plus à un service de liaison spécialisée offrant à l'usager seulement une liaison à haut débit entre deux terminaux prédéterminés. Chaque terminal d'usager bénéficiera d'un véritable service commuté permettant de l'interconnecter à n'importe quel autre terminal d'usager.

Dans le réseau brassé, plusieurs terminaux d'usager se partagent un même conduit virtuel. Avantage principal du mode temporel asynchrone, chaque terminal d'usager transmet des cellules de données à son propre débit. Afin d'optimiser la largeur de bande du conduit virtuel, un débit de transmission de cellule respectif est réservé par chaque terminal d'usager préalablement à la transmission des cellules de données. Dans ce cadre a été défini un protocole de réservation rapide de débit selon lequel le débit dans un conduit virtuel demandé par un terminal d'usager donné est constant ou variable, et une modification de débit peut être requise par le terminal d'usager même au cours d'une communication déjà établie.

L'invention ne concerne pas l'adaptation des ressources en débit entre deux terminaux, c'est-à-dire entre des interfaces d'adaptation de débit entre ces terminaux et le réseau comme décrit dans la demande de brevet européen EP-A-0413488. Le réseau et particulièrement les noeuds de commutation du réseau selon la EP-A-0413488 sont transparents et n'interviennent pas dans l'allocation de débit lors de l'établissement d'une communication entre les terminaux.

L'invention concerne plus particulièrement un procédé de réservation de débit dans des noeuds de commutation d'un réseau temporel asynchrone qui sont traversés par une voie d'acheminement ayant un débit courant mémorisé dans les noeuds et s'étendant entre des premier et second terminaux. Dans chaque noeud de commutation est reçue une cellule de réservation qui contient un débit demandé. La cellule de réservation transmise depuis le premier terminal à travers le réseau est reçue par chaque noeud puis est transmise dans une voie multiplex sortante dudit chaque noeud ayant un débit maximum à travers le réseau vers le second terminal. Dans chaque noeud de commutation de la voie d'acheminement est reçue en sens inverse une cellule d'acquittement qui est transmise par le second terminal vers le premier terminal à travers le réseau en réponse à la cellule de réservation retransmise dans la voie multiplex sortante.

Un tel procédé de réservation de débit est décrit dans le brevet français FR-B-2643532 selon lequel une cellule de réservation et une cellule d'acquittement constituent des premier et second paquets d'appel. Une ressource en terme de débit dans la voie multiplex sortante constituant un conduit virtuel dans chaque noeud de commutation traversé par la voie d'acheminement est attribuée au premier terminal dans chaque noeud de commutation traversé lorsque le débit demandé est inférieur à un débit disponible égal à la différence entre un débit maximum écoulable et un total de débits d'autres voies d'acheminement logiques empruntant la voie multiplex sortante. Dans ces conditions, lorsque le débit demandé est voisin du débit disponible tout en étant inférieur à celui-ci, il ne reste pratiquement plus de ressource disponible à attribuer à d'autres terminaux d'usager, et lorsque le débit demandé est supérieur au débit disponible, la connexion est refusée, alors qu'une partie d'un débit disponible aurait pu satisfaire provisoirement l'usager demandeur.

La demande de brevet EP-A-0 535 860 décrit également un procédé de réservation analogue au précédent, mais en terme de quantité de mémoire tampon, au lieu de débit, dans chaque commutateur de la voie d'acheminement. Comme précédemment, si la quantité de mémoire tampon non allouée est plus grande ou égale à la quantité demandée, la quantité demandée est allouée à la communication dès son établissement, et le paquet de réservation transmis au commutateur suivant est inchangé. Si la quantité de mémoire tampon non allouée n'est pas plus grande ou égale à la quantité demandée, le contrôleur dans le commutateur remplace la quantité demandée par la quantité restante non allouée dans le paquet de réservation transmis au commutateur suivant. La demande en quantité de mémoire tampon est partiellement satisfaite, mais est indépendante de quantités de mémoire tampon demandées pour d'autres communications traversant le commutateur, et est également indépendante de quantités de mémoire tampon qui ont été demandées lors de l'établissement récent de communications et qui ne sont pas encore validées chacune par un paquet d'acquittement contenant une quantité finale minimale admissible par tous les commutateurs traversés par la communication en cours d'établissement.

L'article "A reservation principle with applications to the ATM traffic control" de Pierre BOYER et Didier TRANCHIER publié dans "Computer Networks and ISDN Systems", Vol. 24, No. 4, mai 1992, Amsterdam, pages 321-334, présente un protocole de réservation rapide à transmission retardée FRP-DT ("Fast Reservation Protocol with Delayed Transmission"). Un tel protocole est également destiné à des sources à débit variable par palier négocié.

Un premier terminal d'usager est connecté initialement à un second terminal d'usager par transmission d'une requête d'allocation relative à un débit donné. En cas de nécessité d'une augmentation ou d'une diminution du débit réservé au cours de la communication entre les deux terminaux, le premier terminal transmet une cellule de demande d'augmentation ou de diminution de débit. Cette cellule est reçue par une unité de gestion de protocole rattachée à une pluralité de terminaux et localisée en entrée du réseau ATM. En réponse à une cellule de demande d'augmentation ou de diminution de débit, l'unité de gestion transmet en un nombre limité des demandes successives d'augmentation ou de diminution de débit tant que des demandes précédentes n'ont pas été satisfaites. Dans le cas d'une demande d'augmentation de débit, si l'augmentation de débit demandée ne peut être satisfaite entièrement dans le réseau, la demande d'augmentation de débit est complètement rejetée. Dans le cas inverse, au premier terminal est attribuée une largeur de bande supérieure en dépendance de l'augmentation de débit demandée. Dans tous les cas, le débit courant déjà alloué au terminal n'est pas contesté, et une demande de diminution de débit est une procédure purement indicative qui n'est jamais rejetée.

La demande de brevet CA-A-2 112 756 présente également des procédés de réservation de débit au moyen de cellules de réservation transmises d'un terminal demandeur vers un terminal demandé à travers des noeuds de commutation d'un réseau ATM, avant l'établissement d'une communication de données entre ces terminaux.

Selon un premier type de réservation, le terminal demandeur envoie une cellule de réservation avec un débit maximum demandé. Si le débit P est refusé N fois par le réseau, une cellule de réservation avec un débit P/k est envoyé, le nombre k étant déterminé par le système. Une cellule d'acquittement de réception émise par le terminal demandé confirme éventuellement l'acceptation du débit demandé P ou P/k. Par contre, si le débit demandé P ou P/k est supérieur au débit disponible de l'un des noeuds de la voie virtuelle d'acheminement entre les deux terminaux, la réservation est refusée.

Selon un second type de réservation décrit dans la demande de brevet CA-A-2 112 756, une cellule de réservation inclut des débits maximum P1 et minimum P2 demandés. Dans chaque noeud de commutation, si le débit disponible est supérieur au débit maximum, un débit demandé transmis au prochain noeud égal à P1 est ajouté dans la cellule de réservation ; si le débit disponible est compris entre P1 et P2, le débit demandé ajouté et transmis au prochain noeud est égal au débit disponible. Le dernier noeud de la voie d'acheminement, et non le terminal demandeur, renvoie une cellule d'acquittement avec le plus petit débit demandé au terminal demandé. Si le débit disponible dans l'un des noeuds est inférieur à P1, un signal de rejet est envoyé par le noeud au terminal demandeur alors qu'une partie du débit demandé aurait pu être satisfaite.

Ainsi, selon les documents précités, une demande d'augmentation de débit, c'est-à-dire une demande de débit supérieur à un débit courant déjà attribué à une voie d'acheminement virtuelle entre deux terminaux, n'est pas satisfaite complètement ou est satisfaite entièrement, sans considérer qu'une partie de ressource disponible dans les noeuds de commutation aurait pu être attribuée au terminal demandeur dont la demande n'est pas satisfaite, et qu'une autre partie de ressource disponible aurait pu être conservée pour d'autres terminaux demandeurs en ressource.

En outre, aucun acquittement explicite du débit réservé n'est transmis par le second terminal, ce qui peut engendrer des erreurs dans l'attribution des débits aux voies d'acheminement.

La présente invention vise à fournir un procédé de réservation de débit dans un réseau asynchrone remédiant aux inconvénients de la technique antérieure précitée, et particulièrement à attribuer un débit à un terminal connecté par une voie d'acheminement même lorsqu'au moins l'un des noeuds de commutation traversé par la voie d'acheminement offre un débit disponible inférieur au débit demandé par le terminal.

A cette fin, un procédé de réservation de débit dans des noeuds de commutation d'un réseau temporel asynchrone, tel que défini ci-dessus, est caractérisé par les étapes suivantes dans chaque noeud de commutation lorsque le débit demandé contenu dans la cellule de réservation reçue par ledit chaque noeud de commutation est supérieur au débit courant :

- diminuer le débit demandé en fonction de la différence entre le débit demandé et le débit courant et d'un total mémorisé de débits acceptés et en cours d'acceptation relatifs à d'autres voies d'acheminement empruntant la voie multiplex sortante pour fournir un nouveau débit inférieur au débit demandé, même lorsque la différence entre le débit demandé et le débit courant est supérieure à la différence entre le débit maximum de la voie multiplex sortante et ledit total mémorisé ;
- soustraire le débit courant au total mémorisé pour fournir un premier total provisoire ;
- remplacer le débit demandé par le nouveau débit dans la cellule de réservation reçue ;
- transmettre la cellule de réservation contenant le nouveau débit dans la voie multiplex sortante à travers le réseau en direction du second terminal ;
- additionner au premier total provisoire le plus petit nouveau débit retenu dans lesdits noeuds de commutation traversés par la voie d'acheminement en réponse à une cellule d'acquittement qui contient ledit plus petit nouveau débit retenu et qui est transmise par le second terminal dès réception de la cellule de réservation contenant le plus petit nouveau débit retenu ; et
- mémoriser le plus petit nouveau débit retenu à la place du débit courant.

Ainsi, lorsque le débit demandé est supérieur au débit courant, c'est-à-dire lors d'une augmentation de débit au cours d'une communication, ou lors de l'établissement d'une communication au cours duquel le débit courant est a priori nul, l'augmentation de débit n'est pas systématiquement acceptée entièrement dès que la différence entre le débit demandé et le débit courant est inférieure au reste de débit disponible dans le noeud de commutation. Bien au contraire, l'augmentation de débit sera partiellement satisfaite de manière à partager le reste de débit disponible avec d'autres terminaux d'usager souhaitant augmenter leur débit et associés à des voies d'acheminement empruntant ladite voie multiplex sortante.

La cellule d'acquittement qui accuse réception de la demande d'augmentation de débit par le second terminal, impose dans tous les noeuds de commutation un débit identique qui a priori est compris entre O et le débit demandé par le premier terminal. Plus précisément, à l'étape de diminuer, la différence entre le nouveau débit et le débit courant est inférieure à un débit disponible dans chaque noeud de commutation égal à la différence entre le débit maximum de la voie multiplex sortante et ledit total mémorisé de débits accepté et en cours d'acceptation et varie sensiblement en proportion du débit disponible. En d'autres termes, plus le débit demandé est élevé par rapport au débit disponible, avant la demande d'augmentation de débit, plus le nouveau débit pourra être faible. Ainsi, le réseau garantit un débit même faible à toute demande d'augmentation de débit.

Une telle gestion des ressources en débit dans le réseau est optimale puisque si la ressource demandée excède la ressource disponible, le complément par rapport à la ressource maximum attribuable peut quand même être attribué. Inversement, l'invention garantit quasiment un débit faible à chaque demande d'augmentation de débit.

L'invention se prémunit contre toute perte de cellule d'acquittement, c'est-à-dire tout défaut de confirmation du plus petit nouveau débit retenu, de manière à permettre un maintien du dernier débit courant si un quelconque nouveau débit n'est pas accepté. Le procédé comprend alors les étapes suivantes dans ledit chaque noeud de commutation :

- additionner le nouveau débit et soustraire le débit courant au total mémorisé pour fournir un second total provisoire, à la place de l'étape de soustraire ;
- mémoriser le débit courant à la place d'un ancien débit courant qui était alloué à la voie d'acheminement précédemment à une allocation dudit débit courant à la voie d'acheminement, et mémoriser le nouveau débit à la place du débit courant ;
- additionner le plus petit nouveau débit retenu et soustraire le nouveau débit mémorisé au second total provisoire en réponse à la cellule d'acquittement, à la place de l'étape d'additionner ; et
- mémoriser le plus petit nouveau débit retenu à la place du nouveau débit, à la place de l'étape de mémoriser.

En particulier, l'invention prévoit les étapes suivantes pour que chaque noeud retrouve la configuration ayant précédé la demande de modification de débit lorsqu'aucune cellule d'acquittement ne confirme la modification. Les étapes comprennent :

- déclencher une temporisation prédéterminée en réponse à une cellule de réservation reçue par ledit chaque noeud de commutation ; et
- à l'expiration de la temporisation, lorsqu'aucune cellule d'acquittement relative à ladite voie d'acheminement n'a été reçue par ledit chacun des noeuds de commutation pendant la temporisation prédéterminée :
- additionner ledit ancien débit courant et soustraire ledit nouveau débit mémorisé au second total provisoire, respectivement additionner ledit ancien débit courant et soustraire ledit débit demandé mémorisé au quatrième total provisoire ; et
- mémoriser ledit ancien débit courant à la place du nouveau débit mémorisé, respectivement le débit demandé.

Si la cellule d'acquittement attendue est reçue après l'expiration de la temporisation, cette cellule est détruite dans le noeud de commutation.

La temporisation peut être variable en fonction du nombre de noeuds de commutation restant à traverser par la cellule de réservation reçue entre ledit chacun des noeuds de commutation et ledit second terminal.

Comme selon la technique antérieure, le procédé de réservation selon l'invention inclut également des demandes de diminution de débit qui seront toujours satisfaites. Toutefois, cette diminution de débit est encore confirmée par une cellule d'acquittement contenant le débit demandé en tant que débit retenu par les noeuds de commutation traversés. Ainsi, lorsque le débit demandé est inférieur au débit courant, les étapes suivantes sont effectuées :

- soustraire le débit courant au total mémorisé de débits acceptés et en cours d'acceptation relatifs à d'autres voies d'acheminement empruntant la voie multiplex sortante pour fournir un troisième total provisoire ;
- transmettre la cellule de réservation reçue contenant le débit demandé dans la voie multiplex sortante à travers le réseau en direction du second terminal ;
- additionner le débit demandé au troisième total provisoire en réponse à une cellule d'acquittement qui contient ledit débit demandé et qui est transmise par le second terminal dès réception de la cellule de réservation contenant le débit demandé ; et
- mémoriser le débit demandé à la place du débit courant.

Comme déjà dit, l'invention se préserve contre toute perte de cellule d'acquittement afin de replacer, en cas de perte de cellule, chaque noeud de commutation dans les conditions ayant précédé la demande de diminution de débit. Pour une telle diminution, le procédé de réservation comprend les étapes suivantes dans le noeud de commutation :

- additionner le débit demandé et soustraire le débit courant au total mémorisé pour fournir un quatrième total provisoire, à la place de l'étape de soustraire précédemment énoncée ;
- mémoriser le débit courant à la place d'un ancien débit courant qui était alloué à la voie d'acheminement précédemment à une allocation dudit débit courant à la voie d'acheminement, et mémoriser le débit demandé à la place du débit courant ;
- additionner le débit demandé contenu dans la cellule d'acquittement et soustraire le débit demandé mémorisé au quatrième total provisoire en réponse à la cellule d'acquittement à la place de l'étape d'additionner au troisième total provisoire précédemment énoncé.

L'invention concerne également un dispositif de réservation de débit dans un noeud de commutation d'un réseau temporel asynchrone. Il comprend un premier moyen d'entrée pour recevoir des cellules de réservation et y extraire respectivement des identificateurs et des débits demandés pour des voies d'acheminement empruntant une voie multiplex sortante du noeud de commutation, un second moyen d'entrée pour recevoir des cellules d'acquittement et y extraire respectivement des identificateurs de voie d'acheminement, un premier moyen de sortie pour retransmettre des cellules d'acquittement, et un second moyen de sortie pour retransmettre des cellules de réservation dans ladite voie multiplex sortante, et une mémoire de contexte mémorisant des débits adressés en lecture respectivement par les identificateurs de voie extraits. Le dispositif est caractérisé en ce qu'il comprend, en outre :

- un moyen pour soustraire un débit courant adressé en lecture dans la mémoire de contexte par l'identificateur d'une voie d'acheminement donnée extrait d'une cellule de réservation reçue par les premiers moyens d'entrée, au débit demandé extrait de la cellule de réservation reçue de manière à fournir une différence,
- un moyen pour cumuler des débits acceptés et en cours d'acceptation relatifs aux voies d'acheminement empruntant la voie multiplex sortante en un total, et
- un moyen sensible à la différence lorsqu'elle est positive et/ou à un mot de demande d'augmentation de débit contenu dans la cellule de réservation pour pondérer le débit demandé par un coefficient de pondération négatif qui dépend de ladite différence et dudit total de manière à fournir un nouveau débit inférieur au débit demandé et afin que le moyen pour cumuler soustrait le débit courant du total pour fournir un premier total provisoire,
- les seconds moyens de sortie remplaçant le débit demandé par ledit nouveau débit dans la cellule de réservation reçue à retransmettre dans la voie multiplex sortante, et

les seconds moyens d'entrée extrayant d'une cellule d'acquittement reçue un plus petit nouveau débit retenu dans les noeuds de commutation du réseau traversés par la voie d'acheminement donnée, afin que le plus petit nouveau débit retenu soit additionné au premier total provisoire dans les moyens pour cumuler et écrit à la place du débit courant dans la mémoire de contexte.

Selon une réalisation préférée, les coefficients de pondération sont préétablis. Le moyen pour pondérer comprend alors une mémoire de coefficients de pondération qui est adressée en lecture à la fois par des bits de poids fort dudit total dans les moyens pour cumuler et des bits de poids fort de ladite différence, et un additionneur pour additionner le coefficient de pondération négatif lu dans la mémoire de pondération et le débit demandé.

La mémoire de contexte comprend des cases ayant chacune des première et seconde parties, des sorties de données des premières parties de case étant reliées directement à des entrées de données des secondes parties de case, et des sorties de données des secondes parties de case étant reliées à des entrées de données des premières parties de case à travers un moyen de sélection de débit. Ce croisement entre entrées de données et sorties de données est utile pour transférer des débits de manière à enregistrer un nouveau débit tout en conservant un ancien débit, mais également à réutiliser l'ancien débit en effaçant le nouveau débit.

Pour une demande d'augmentation de débit, relativement à une case de mémoire adressée par l'identificateur de la voie d'acheminement donnée,

le débit courant est lu dans la première partie de la case de mémoire pour l'appliquer au moyen pour soustraire,

le nouveau débit fourni par le moyen pour pondérer est additionné audit total auquel est soustrait ledit débit demandé dans le moyen pour cumuler et est écrit à travers le moyen de sélection de débit dans la première partie de la case de mémoire quasi-simultanément au transfert du débit courant de la première partie vers la seconde partie de la case de mémoire à travers les sorties de données des premières parties et les entrées de données des secondes parties de la mémoire de contexte, et

le plus petit nouveau débit retenu extrait de la cellule d'acquittement reçue est additionné au et le nouveau débit lu dans la première partie de la case de mémoire est soustrait du total dans le moyen pour cumuler quasi-simultanément à l'écriture du plus petit nouveau débit retenu dans la première partie de la case de mémoire à travers le moyen de sélection de débit.

En réponse à une différence négative produite par le moyen pour soustraire et/ou une demande de diminution de débit contenue dans la cellule de réservation, la mémoire de contexte mémorise le débit demandé extrait de la cellule de réservation, le moyen pour cumuler soustrait le débit courant du total, et le second moyen de sortie transmet la cellule de réservation avec le débit demandé. En réponse à une cellule d'acquittement reçue à la suite de la cellule de réservation avec le débit demandé, le moyen pour cumuler additionne le débit demandé extrait de la cellule d'acquittement au total.

Les liaisons croisées entre entrées et sorties de données de la mémoire de contexte sont également utilisées relativement à une case de mémoire adressée par l'identificateur de la voie d'acheminement et en réponse à une différence négative et/ou un mot de demande de diminution de débit dans la cellule de réservation. Le débit demandé est additionné au total et le débit courant lu dans la première partie de la case de mémoire est soustrait du total dans le moyen pour cumuler quasi-simultanément à l'écriture du débit demandé dans la première case de mémoire à travers le moyen de sélection de débit et au transfert du débit courant de la première partie vers la seconde partie de la case de mémoire à travers les sorties de données des premières parties et les entrées de données des secondes parties de la mémoire de contexte. Le débit demandé extrait de la cellule d'acquittement est additionné au total et le débit demandé lu dans la première partie de la case de mémoire est soustrait au total dans le moyen pour cumuler quasi-simultanément à l'écriture du débit demandé extrait de la cellule d'acquittement dans la première case de mémoire.

Une temporisation est de préférence déclenchée par la cellule de réservation reçue par le premier moyen d'entrée. Lorsqu'aucune cellule d'acquittement n'a été reçue par le second moyen d'entrée à l'expiration de la temporisation, le contenu de la seconde partie de la case de mémoire est alors transféré dans la première partie de la case de mémoire à travers les sorties de données des secondes parties de la mémoire de contexte, le moyen de sélection de débit et les entrées de données des premières parties de la mémoire de contexte, et est additionné au total dans le moyen pour cumuler simultanément à la soustraction du contenu de la première partie de la case du total dans le moyen pour cumuler.

En outre, le dispositif peut comprendre un moyen pour convertir un débit demandé exprimé en un premier code contenu dans une cellule de réservation en le débit demandé exprimé en un second code appliqué au moyen pour soustraire et à la mémoire de contexte, un moyen pour convertir un nouveau débit exprimé en le premier code produit par les moyens de pondération et appliqué au second moyen de sortie en le nouveau débit exprimé en le second code appliqué au moyen pour cumuler et à la mémoire de contexte, et un moyen pour convertir un débit exprimé en le premier code contenu dans une cellule d'acquittement en le débit retenu exprimé en le second code appliqué au moyen pour cumuler et à la mémoire de contexte.

De préférence, le premier code est un code nécessitant moins de bits que le second code de manière à libérer les cellules pour contenir d'autres informations. Par exemple, le premier code est un code en virgule flottante et le second code est un code en virgule fixe.

D'autres caractéristiques et avantages de la présente invention apparaîtront plus clairement à la lecture de la description suivante de réalisations préférées de l'invention en référence aux dessins annexés correspondants dans lesquels :

- la figure 1, déjà commentée, montre l'architecture d'un réseau ATM final pour expliquer les deux étapes de développement d'un tel réseau ;
- la figure 2 montre un format de cellule de réservation de débit ATM selon l'invention ;
- la figure 3 est un bloc-diagramme d'un dispositif de réservation de débit selon l'invention inclus dans un noeud de commutation de réseau ATM ; et

- la figure 4 est un algorithme du procédé de réservation de débit selon l'invention.

En référence à la figure 2, l'entité de transfert dans un réseau ATM est une **cellule** de longueur fixe composée d'un en-tête à 5 octets et d'un champ d'information à 48 octets. En particulier, dans une cellule de réservation de débit qui transite dans une voie d'acheminement logique entre une source de données, telle que terminal d'usager, et une interface d'accès d'usager dans un noeud de commutation de rattachement, l'**entête** comprend :

- un mot à 4 bits GFC pour le contrôle de flux ;
- un identificateur de conduit virtuel à 8 bits VPI ("Virtual Path Identifier") ;
- un identificateur de voie virtuelle à 16 bits VCI ("Virtual Channel Identifier") ;
- un mot à trois bits PTI = "110" pour indiquer une demande de réservation de débit, suivi d'un bit de priorité à la perte de cellules CLP ; et
- un octet de contrôle d'erreur sur l'en-tête HEC.

Ce format d'en-tête valable à l'interface usager-réseau UNI (figure 1) est quelque peu modifié à l'interface réseau - réseau NNI (figure 1) entre deux noeuds de commutation du réseau, qu'ils soient chacun un brasseur ou un commutateur de réseau. A l'interface NNI, le champ GFC disparaît tandis que l'identificateur VPI est étendu à 12 bits avec les 4 bits du mot GFC. Les identificateurs VPI et VCI identifient la voie d'acheminement d'une communication, voie virtuelle et/ou conduit virtuel contenant la voie virtuelle le long de laquelle seront échangées des cellules entre le terminal et un autre terminal à travers les noeuds de commutation du réseau ATM. Dans la suite, l'ensemble des identificateurs VPI et VCI est appelé "identificateur de voie d'acheminement" VPI/VCI.

Une cellule de réservation de débit se distingue donc des autres cellules par le code PTI = "110" et par des informations complémentaires contenues dans le champ d'information constituant la charge utile ("payload") de la cellule. Ces **informations** complémentaires sont notamment :

- un mot de type de protocole de réservation à 8 bits MTP ;
- un mot de fonction à 4 bits MF ;
- un mot de débit demandé en virgule flottante à 9 + 5 = 14 bits DDFL ;
- un mot de temporisation à 6 bits TIM ;
- un mot de tolérance de gigue de conduit virtuel à 8 bits GIG ; et
- un mot de code de protection d'information à 8 bits CPI.

Le mot de débit demandé DDFL indique un débit en virgule flottante (FL) exprimé en nombre de cellules par seconde et comprenant une première partie représentative d'une mantisse en code binaire et une seconde partie représentative d'un exposant en code binaire. Par contre, les mots de débit traités dans le dispositif de réservation de débit selon l'invention expriment des débits en virgule fixe (FI). Par exemple, un mot DDFL composé de 9 bits de mantisse et de 5 bits d'exposant correspond à un mot de débit demandé en virgule fixe DDFI ayant 32 bits et exprimant une valeur parmi $16384 = 2^9.2^5$ débits. D'autres codages continus plus classiques que celui en virgule flottante peuvent être utilisés.

Tous les paramètres et variables traités dans le dispositif de réservation de débit selon la réalisation décrite ci-après sont codés en virgule fixe. Des mots inclus dans les cellules sont codés en virgule flottante (FL) : le mot de débit demandé DDFL, un mot de nouveau débit courant NDFL qui est alloué localement par le dispositif de réservation et introduit en remplacement du mot DDFL dans une cellule de réservation pour être transportée vers le prochain noeud de commutation, et un mot de débit retenu DRFL qui est alloué par le dernier noeud de commutation de la voie d'acheminement de la communication et qui est retransmis par un terminal "demandé" vers un terminal "demandeur" dans une cellule d'acquittement.

Les mots PTI, MTP et MF diffèrent entre cellule de réservation de débit et cellule d'acquittement.

Les autres paramètres et variables traités dans le dispositif de réservation sont les suivants et seront respectivement confondus avec les mots binaires exprimés en virgule fixe (FI) dans la suite de la description.

- DDFI : débit demandé en virgule fixe par un terminal "demandeur", correspondant au débit demandé DDFL exprimé en virgule flottante ;
- ADCFI : ancien débit courant alloué à la voie d'acheminement concernée exprimé en virgule fixe, conservé en mémoire jusqu'au retour de la cellule d'acquittement afin de maintenir un état cohérent des réservations de débit dans le réseau ;
- DCFI : Débit courant alloué à la voie d'acheminement concernée, exprimé en virgule fixe ;
- DELTA : différence entre débit demandé DDFI et débit courant DCFI ;
- TDAFI : Total des débits acceptés et en cours d'acceptation, exprimé en virgule fixe ;
- CP : coefficient de pondération à appliquer à DELTA quand DELTA est positif, c'est-à-dire pour une augmentation de débit, pour estimer le nouveau débit courant à allouer si possible ;
- NDFI : nouveau débit courant alloué localement, exprimé en virgule fixe, correspondant au nouveau débit courant NDFL, exprimé en virgule flottante ; et
- DRFI : débit finalement retenu, exprimé en virgule fixe, correspondant au débit retenu DRFL exprimé en virgule flottante, finalement alloué par le dernier noeud de commutation de la voie d'acheminement concernée.

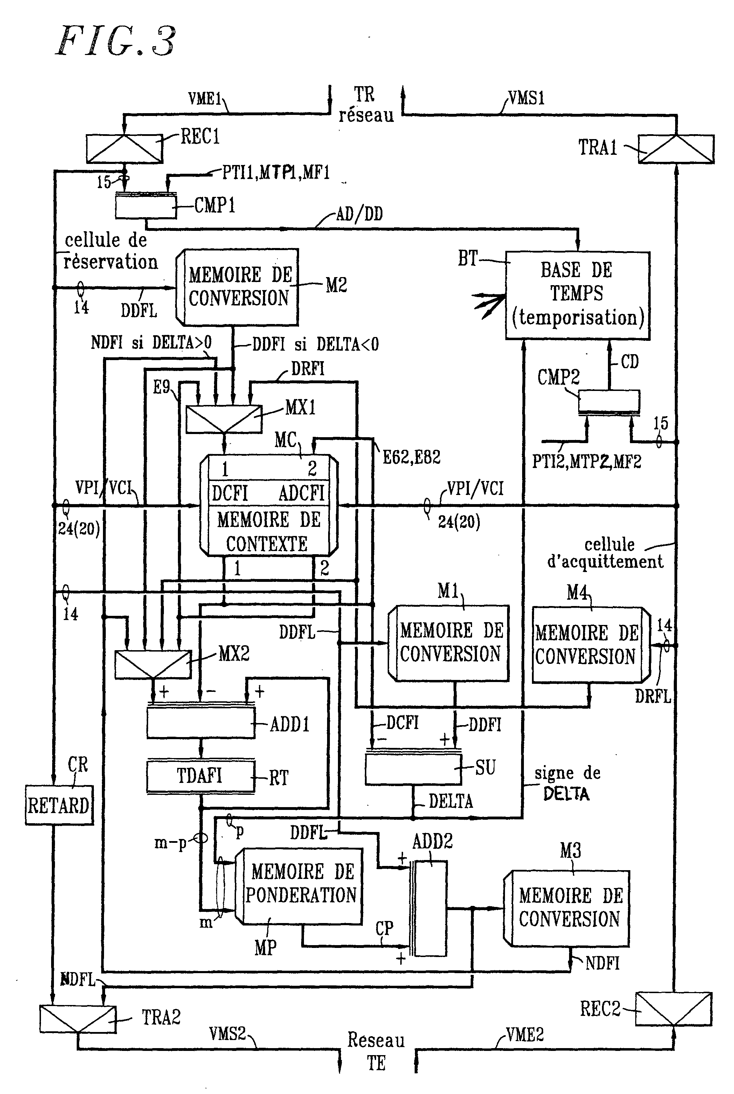

**Le dispositif de réservation de débit** selon l'invention, montré à la figure 3, est localisé dans un noeud de commutation, tel que commutateur ATM 20, 21, 22 ou brasseur ATM 10, 11, 12 selon figure 1, entre plusieurs voies multiplex numériques entrantes ATM et plusieurs voies multiplex numériques sortantes ATM associées respectivement par couples de voies entrante et sortante constituant des conduits virtuels à d'autres noeuds de commutation. A titre d'exemple, référence sera faite dans la suite à une connexion logique à travers une voie d'acheminement empruntant des noeuds de commutation entre deux terminaux. Le premier terminal est appelé "terminal demandeur" TR et le second terminal est appelé "terminal demandé" TE. La connexion logique est destinée à une communication unidirectionnelle pour transmettre des données du terminal demandeur TR vers le terminal demandé TE ou des données du terminal demandé TE vers le terminal demandeur TR, ou à une communication bidirectionnelle pour échanger des données entre les deux terminaux TR et TE, comme décrit en référence à des figures 1, 3 et 4 dans le FR-B-2643532. Il sera supposé dans la suite que le débit demandé est fixé par le terminal demandeur TR indifféremment lors de l'établissement de la communication, ou pendant la communication proprement dite.

Afin de ne pas surcharger la figure 3, seuls deux couples de **voies multiplex** numériques entrante et sortante VME1 et VMS1, VME2 et VMS2 intervenant dans le cheminement de la communication sont représentées. Tous les autres moyens de traitement des cellules par ailleurs connus notamment pour effectuer des commutations dans le noeud de commutation ont été omis.

La première voie entrante VME1 reçoit une cellule de demande de réservation de débit directement du terminal demandeur TR lorsque le noeud de commutation est le commutateur de rattachement du terminal TE, ou indirectement à travers le réseau de commutation. Le débit demandé DDFL inclus dans la cellule de réservation de débit est égal au débit demandé par le terminal TR lorsque le noeud de commutation est le commutateur de rattachement du terminal TE, ou égal à un nouveau débit courant NDFL alloué par le noeud de commutation précédant le noeud de commutation concerné suivant la voie d'aller de TR vers TE dans la voie d'acheminement concernée. La seconde voie entrante VME2 reçoit une cellule d'acquittement dont le champ d'information contient, à la place du débit DDFL, le débit retenu DRFL retransmis par le terminal demandé TE le long de la voie de retour de TE vers TR dans la voie d'acheminement concernée afin d'imposer le débit retenu à tous les noeuds de commutation traversés par la voie d'acheminement. La première voie multiplex sortante VMS1 est associée parallèlement à la voie entrante VME1 et retransmet la cellule d'acquittement vers le noeud de commutation suivant s'il existe, ou le terminal demandeur, suivant la voie d'acheminement de retour de TE vers TR. La voie multiplex sortante VMS2 est associée parallèlement à la voie entrante VME2 et dessert le noeud de commutation suivant le noeud de commutation concerné le long de la voie d'acheminement d'aller de TR vers TE, ou bien dessert le terminal demandé TE lorsque le noeud de commutation concerné est le commutateur de rattachement du terminal demandé TE.

Chacune des voies multiplex entrantes VME1, VME2 est reliée à un circuit de réception connu REC1, REC2 assurant toutes les fonctions de réception d'une voie multiplex ATM, telles que synchronisation des cellules reçues avec une horloge locale dans le noeud de commutation concerné, conversion série-parallèle des cellules, contrôle d'erreur, commutation de cellules entre voies multiplex, etc.

Une cellule dans la voie multiplex VME1 reçue par le circuit REC1 est fournie par un bus à 53 x 8 bits partiellement à 3 + 8 + 4 = 15 premières entrées d'un premier circuit de comparaison CMP1, partiellement à des ports d'adresse de lecture à 14 bornes de deux mémoires de conversion M1 et M2, et entièrement à un premier port d'entrée d'un circuit de transmission TRA2 à travers un circuit de retard CR. Ce circuit CR retarde chaque cellule reçue de la durée du traitement dans le dispositif de réservation de débit afin qu'en réponse à une cellule de réservation de débit reçue, le dispositif de réservation estime le nouveau débit NDFL en fonction notamment de DELTA et TDAFI et l'inscrive dans le champ d'information de la cellule de réservation à la place du débit DDFL demandé par le terminal TR ou le noeud de commutation précédent, lors d'une demande d'augmentation de débit. Pour cela, le circuit de transmission TRA2 présente un second port d'entrée à 14 fils auquel est appliqué le mot de nouveau débit NDFL par une troisième mémoire de conversion M3. Le circuit de transmission TRA2 assure notamment un multiplexage d'une cellule de réservation de débit avec le mot NDFL afin de transmettre une cellule de réservation avec le nouveau débit dans la voie multiplex sortante VMS2, lorsque la cellule de réservation signale une augmentation de débit.

Une cellule reçue par le second circuit de réception REC2 est appliquée partiellement à 15 premières entrées d'un second circuit de comparaison CMP2 et à un port d'adresse de lecture à 14 bornes d'une quatrième mémoire de conversion M4 et entièrement à un autre circuit de transmission TRA1 relié à la voie multiplex sortante VMS1.

Les circuits de comparaison CMP1 et CMP2 comparent des combinaisons de mots PTI, MTP et MF incluses dans les cellules reçues respectives avec des première et seconde combinaisons prédéterminées (PTI1, MTP1, MF1) et (PTI2, MTP2, MF2) appliquées par des mémoires mortes programmables. La première combinaison est détectée par le circuit de comparaison CMP1 lorsque la cellule reçue par le circuit de réception REC1 est une cellule de demande de réservation de débit, c'est-à-dire une cellule de réservation dans laquelle le débit demandé DDFL est différent, supérieur ou inférieur, au débit courant correspondant alloué à la voie d'acheminement concernée. La réservation est signalée par le mot PTI = "110". La distinction entre augmentation de débit et diminution de débit est introduite dans le mot de fonction MF. Par exemple, une augmentation de débit est indiquée par un mot de fonction prédéterminé MF = MF1 dans la cellule de réservation reçue. Le circuit de comparaison CMP1 génère un signal d'augmentation de débit AD qui valide des opérations de traitement de débit dans la plupart des mémoires et autres circuits inclus dans le dispositif de réservation, à l'exception des mémoires M2 et M4. A contrario, lorsque le circuit de comparaison CMP1 détecte les mots PTI et MTP1 dans une cellule reçue par le circuit REC1 et contenant un mot MF = MF2 différent de MF1, le circuit de comparaison CMP1 produit un signal de diminution de débit DD. La seconde combinaison prédéterminée (PTI2, MTP2, MF2) est détecté dans une cellule d'acquittement reçue par le second circuit de réception REC2 et à retransmettre par le circuit TRA1. Le circuit REC2 génère alors un signal de confirmation de débit CD qui valide une mémorisation de débit retenu DRFI dans une mémoire de contexte MC.

En pratique, les signaux AD/DD et CD sont appliqués à une base de temps BT qui génère tous les signaux d'horloge utiles au traitement d'une augmentation/diminution de débit et d'une confirmation de débit dans les mémoires et circuits inclus dans le dispositif de réservation de débit. La base de temps BT participe à la synchronisation des cellules reçues dans les circuits REC1 et REC2 et des cellules à transmettre dans les voies multiplex sortantes VMS1 et VMS2 par les circuits de transmission TRA1 et TRA2. Par exemple, la base de temps BT comprend un dispositif de temporisation multiple analogue à celui décrit dans le FR-B-2674084.

Chacune des **mémoires** M1, M2, M3 et M4 est une mémoire PROM qui convertit un débit exprimé en virgule flottante en un débit exprimé en virgule fixe grâce à la correspondance entre une adresse de lecture égale au mot de débit en virgule flottante et le mot de débit en virgule fixe mémorisé dans une case respective de la mémoire.

Les mémoires M1 et M2 convertissent le mot de débit demandé DDFL en virgule flottante à 14 bits contenu dans une cellule de réservation de débit reçue par le circuit de réception REC1 en un mot de débit demandé en virgule fixe DDFI respectivement appliqué à des entrées positives d'un soustracteur SU et à des troisièmes entrées d'un premier multiplexeur MX1 et des secondes entrées d'un second multiplexeur MX2. Les deux mémoires M1 et M2 ont été représentées distinctement parce que les mots DDFI sont lus dans ces mémoires à des instants différents selon le procédé de réservation décrit ci-après. Toutefois, les deux mémoires M1 et M2 peuvent être confondues en une unique mémoire de conversion présentant des lectures partagées dans le temps pour une même adresse de lecture.

La mémoire M3 convertit un mot de nouveau débit en virgule flottante NDFL délivré par un additionneur ADD2 et appliqué au second port d'entrée du circuit de transmission TRA2 en un mot de débit en virgule fixe NDFI appliqué à des secondes entrées du premier multiplexeur MX1 et des premières entrées du second multiplexeur MX2.

La dernière mémoire de conversion M4 convertit un mot de débit retenu en virgule flottante DRFL contenu dans une cellule d'acquittement reçue par le second circuit de réception REC2 en un mot de débit retenu en virgule fixe DRFI appliqué à des quatrièmes entrées du premier multiplexeur MX1 et des troisièmes entrées du second multiplexeur MX2.

Le premier multiplexeur MX1 présente également des premières entrées reliées à des quatrièmes entrées du second multiplexeur MX2 et à des secondes sorties de données de la **mémoire de contexte** MC dont des premières entrées de données sont reliées aux sorties du multiplexeur MX1. Des premières sorties de données de la mémoire MC sont reliées à des secondes entrées de données de la mémoire MC ainsi qu'à des entrées négatives d'un additionneur ADD1 et des entrées négatives du soustracteur SU.

La mémoire de contexte MC contient des cases ayant des première et seconde parties adressées par les identificateurs de voie d'acheminement VPI/VCI inclus dans les cellules de réservation et cellules d'acquittement transmises par les circuits de réception REC1 et REC2. Une première partie de case de mémoire correspond aux premières entrées et sorties de données pour mémoriser le mot de débit courant DCFI qui est sélectionné parmi quatre dans le multiplexeur MX1. Une seconde partie de case de mémoire correspond aux secondes entrées et sorties de données pour mémoriser le mot d'ancien débit courant ADCFI alloué à la voie d'acheminement antérieurement à une demande d'augmentation/diminution de débit.

La mémoire MC présente ainsi un croisage entre d'une part les secondes sorties et les premières entrées et d'autre part les premières sorties et les secondes entrées de manière à effectuer des transferts de mots de débit entre les première et seconde parties de chaque case de mémoire de contexte suivant les deux sens. Le contenu de la première partie d'une case de mémoire peut être transféré dans la seconde partie de la case de mémoire en réponse à une cellule de demande d'augmentation/diminution de débit afin de considérer provisoirement le débit courant DCFI comme ancien débit ADCFI. Inversement, le contenu de la seconde partie de la case de mémoire peut être transféré dans la première partie de la case de mémoire par défaut de réception de cellule d'acquittement après une temporisation prédéterminée par la base de temps BT, afin de remplacer un nouveau débit demandé NDFI ou un débit demandé DDFI non confirmé, par l'ancien débit courant ADCFI = DCFI précédant la demande d'augmentation/ diminution de débit.

Le dispositif de réservation de débit comprend encore un registre totaliseur RT et une mémoire de pondération MP qui, avec les mémoires M1 et M3, les additionneurs ADD1 et ADD2 et le soustracteur SU, constituent un **moyen pour estimer un nouveau débit** NDFI en fonction du débit demandé DDFI lorsque celui-ci est supérieur au débit courant DCFI.

Le registre totaliseur RT est relié aux sorties de l'additionneur ADD1 qui offre des premières entrées positives reliées aux sorties du multiplexeur MX2 et des secondes entrées positives reliées aux sorties du registre totaliseur. Le registre totaliseur cumule tous les débits déjà acceptés TDAFI dans la voie multiplex sortante VMS2, y compris

- tout nouveau débit en cours d'acceptation NDFI appliqué par les premières entrées du multiplexeur MX2 lorsqu'une augmentation de débit demandée est en cours d'acceptation par le réseau, et
- tout débit demandé DDFI appliqué par les secondes entrées du multiplexeur MX2 lorsqu'une demande de diminution de débit est en cours d'acceptation par le réseau.

Les entrées négatives de l'additionneur ADD1 permettent de retrancher le débit courant DCFI lu en mémoire de contexte MC et devenant l'ancien débit lors d'une demande d'augmentation/diminution de débit, mais également de retrancher le nouveau débit NDFI ou le débit demandé DDFI lu en mémoire de contexte MC simultanément à une addition du débit retenu DRFI après l'acceptation d'augmentation/diminution de débit, ou simultanément à une addition d'un ancien débit ADCFI après une temporisation prédéterminée indiquant une inacceptation de modification de débit.

La mémoire de pondération MP contient des coefficients de pondération CP qui tempèrent les augmentations de débit demandées signalées par des DELTA = DDFI - DCFI positifs transmis par le soustracteur SU d'autant plus que le total TDAFI des débits déjà acceptés est élevé. A cette fin, la mémoire de pondération MP est adressée par des adresses de lecture à m bits. Chaque adresse de lecture comporte une première partie avec des bits de poids forts qui est composée de (m - p) bits de poids fort du total de débits TDAFI issu du registre totaliseur RT, et une seconde partie avec des bits de poids faible qui est composée de p bits de poids fort de la différence DELTA fournie par le soustracteur SU, l'entier m étant supérieur à l'entier p. La première partie à (m-p) bits adresse des pages de coefficients de pondération CP respectivement associées à des totaux de débit. La seconde partie à p bits adresse des coefficients de pondération CP faisant varier la pondération dans chacune des pages précédentes. Le coefficient lu CP résultant d'un tel adressage est appliqué par des sorties de données de la mémoire de pondération MP à des premières entrées du second additionneur ADD2. Le coefficient CP a généralement un bit de signe négatif de manière à diminuer le débit demandé DDFL dans l'additionneur ADD2 en un nouveau débit NDFL plus petit que le débit DDFL mais supérieur ou égal au débit courant DCFL.

Le coefficient lu CP peut être nul lorsqu'une diminution de débit est demandée, c'est-à-dire lorsque la différence DELTA = DDFI - DCFI est négative afin de maintenir un débit demandé DDFL inchangé en sortie de l'additionneur ADD2, bien que ceci ne soit pas strictement nécessaire.

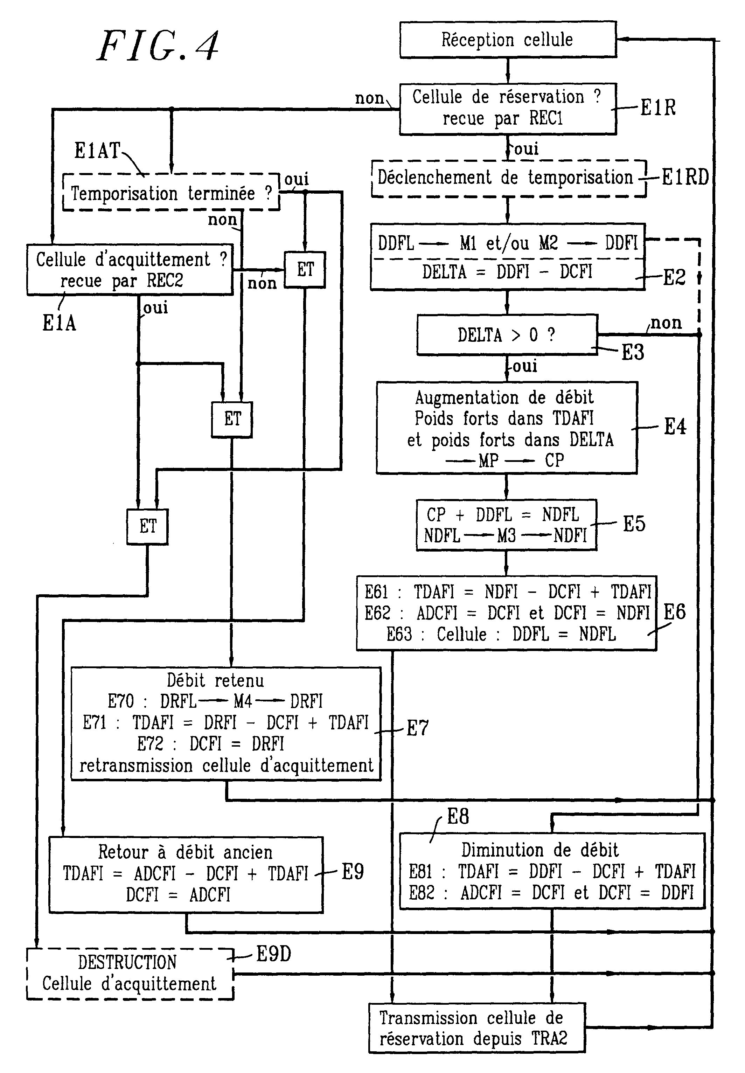

**Le procédé de réservation de débit** selon l'invention, mis en oeuvre dans le dispositif de réservation de débit dans un noeud de commutation donné de réseau temporel asynchrone ATM illustré à la figure 3, est présenté ci-dessous en référence à la figure 4. Ce procédé est valable indifféremment pour une communication à établir ou déjà établie.

Il est supposé tout d'abord qu'une cellule de réservation transmise par le terminal demandeur TR, éventuellement modifiée dans des noeuds de commutation précédant le noeud donné, et reçue par le premier circuit de réception REC1 contient un mot d'**augmentation de débit** MF. A la première étape E1R, le mot MF produit un signal AD appliqué par le premier circuit de comparaison CMP1 à la base de temps BT qui commande successivement des lectures et écritures dans les mémoires et opérations dans les circuits du dispositif de réservation aux étapes suivantes E2 à E6.

A la seconde étape E2, le mot de débit demandé en virgule flottante DDFL contenue dans la cellule de réservation reçue est l'adresse de lecture pour lire le mot de débit demandé en virgule fixe respectif DDFI dans la mémoire de conversion M1. Le mot de débit courant respectif DCFI actuellement dans une première partie de case de la mémoire de contexte MC, représentatif du débit de la communication concernée éventuellement en cours, est également lu en réponse à un adressage par l'identificateur de voie d'acheminement VPI/VCI dans la cellule de réservation reçue. Les mots DDFI et DCFI lus dans les mémoires M1 et MC sont appliqués au soustracteur SU qui calcule la différence DELTA = DDFI - DCFI en virgule fixe dont le bit de signe est fourni à la base de temps BT. Comme déjà dit, l'indication d'augmentation/diminution de débit dans le mot MF d'une cellule de réservation n'est pas strictement nécessaire dans une cellule de réservation, puisque cette indication est supportée par le bit de signe de la différence DELTA.

La base de temps BT teste le bit de signe de DELTA à l'étape E3 et commande les trois étapes suivantes E4, E5 et E6 lorsque le signal de DELTA est positif et donc correspond à une demande d'augmentation de débit.

Avant l'étape E4, le total TDAFI dans le registre totalisateur RT concerne des débits qui ont été acceptés et sont en cours d'acceptation avant la réception de la cellule de réservation concernée et correspondent à d'autres voies d'acheminement de communication empruntant la voie multiplex de sortie VMS2. Les m-p bits de poids fort du total TDAFI et les p bits de poids forts de la différence DELTA sont appliqués en tant que bits de poids fort et bits de poids faible d'une adresse de lecture à la mémoire de pondération MP. Cette mémoire fournit le coefficient de pondération respectif CP aux premières entrées de l'additionneur ADD2. La mémoire MP contribue à moduler ainsi une pondération à la fois en fonction du débit TDAFI déjà réservé et en cours de réservation dans la voie multiplex VMS2 et en fonction de l'augmentation de débit demandé DELTA > O. Des bits d'adresse de la mémoire MP en nombre limité s'avèrent suffisants, par exemple p = 7 et m = 14. Le coefficient CP peut être égal à zéro lorsque le total des débits TDAFI lu dans le registre RT est relativement faible, ce qui traduit une faible occupation de la voie multiplex sortante VMS2 et/ou lorsque l'augmentation de débit DELTA est relativement faible comparativement au total des débits. Quelle que soit l'augmentation de débit, le coefficient CP est sélectionné de manière à toujours laisser un minimum de ressource en débit à d'autres communications prochaines ou en cours transitant par la voie VSM2. En d'autres termes, la somme du total TDAFI - DCFI et du débit en cours d'acceptation NDFI, inférieur ou égal à DDFI, est toujours inférieure à un débit maximum que peut accepter la voie multiplex sortante VMS2.

C'est pourquoi, en général, et plus particulièrement en période de trafic chargé, le coefficient CP est négatif de manière à modifier le débit demandé DDFL inclus dans la cellule de réservation en un nouveau débit demandé localement NDFL produit par l'additionneur ADD2 à l'étape E5. Le nouveau débit en virgule flottante NDFL, inférieur au débit initialement demandé DDFL, est converti en un mot de nouveau débit en virgule fixe NDFI dans la mémoire M3 adressé par le résultat CP + DDFL produit par l'additionneur ADD2, et est appliqué aux secondes entrées du circuit de transmission TRA2.

L'étape suivante E6 comporte trois sous-étapes quasi-simultanées E61, E62 et E63.

La première sous-étape E61 met à jour le total des débits TDAFI en y cumulant la différence positive NDFI - DCFI entre le nouveau débit NDFI, qui est appliqué par la mémoire M3 à travers le multiplexeur MX2 aux premières entrées positives de l'additionneur ADD1, et le débit courant DCFI qui précède cette réservation de débit en cours et est appliqué aux entrées négatives de l'additionneur ADD1 par lecture de la première partie de la case dans la mémoire MC adressée par l'identificateur VPI/VCI. Grâce au rebouclage des sorties du registre totaliseur RT vers les secondes entrées positives de l'additionneur ADD1, ce dernier écrit le résultat NDFI - DCFI + TDAFI dans le registre RT qui le conserve provisoirement jusqu'à réception d'une cellule d'acquittement ou débordement de la temporisation prédéterminée sans réception de cellule d'acquittement, comme on le verra dans la suite.

La seconde sous-étape E62 sauvegarde le nouveau débit NDFI dans la case respective de la mémoire de contexte MC déjà adressée à l'étape E2 et à la sous-étape E61. Le débit courant initial DCFI glisse dans la seconde partie de ladite case respective afin de considérer ce débit provisoirement comme un ancien débit ADCFI et le maintenir ultérieurement comme débit courant au cas où tout nouveau débit égal ou inférieur à NDFI ne serait pas accepté et confirmé par le réseau le long de la voie d'acheminement concernée, ou en cas de débordement de la temporisation prédéterminée. Concomitamment, le nouveau débit NDFI est écrit via les secondes entrées du multiplexeur MX1, dans la première partie de la case respective de la mémoire de contexte MC.

Enfin, la troisième sous-étape E63 consiste à remplacer le mot de débit demandé DDFL inclus dans le champ d'information de la cellule de réservation transitant par le circuit de retard CR, par le mot de nouveau débit NDFL produit par l'additionneur ADD2. Ce remplacement est effectué dans le circuit de transmission TRA2 afin de transmettre la cellule de réservation ainsi modifiée, via la voie multiplex VMS2, vers le prochain noeud de commutation du réseau ATM le long de la voie virtuelle d'acheminement de la communication concernée, ou directement au terminal demandé TE lorsque le noeud concerné aux figures 3 et 4 est le commutateur de rattachement du second terminal TE.

Dans chacun des noeuds suivants successifs, s'ils existent, traversés par la cellule de réservation, le débit indiqué dans cette cellule est à nouveau examiné par rapport au total instantané des débits acceptés et en cours d'acceptation dans ledit chacun des noeuds relativement à la voie multiplex sortante correspondante. Le débit examiné est maintenu ou, le plus souvent, est diminué si bien que le dernier desdits noeuds suivants transmet au terminal demandé TE un débit DRFL finalement retenu par le réseau qui est a priori inférieur au nouveau débit accepté localement NDFL dans le noeud concerné, et est rarement égal au débit NDFL, voire au débit DDFL demandé initialement par le terminal demandeur TR ou l'un des noeuds précédant le noeud concerné.

Le terminal demandé TE retourne une **cellule d'acquittement de débit** qui est examinée successivement dans les noeuds de commutation jusqu'au terminal demandeur TR afin que tous les noeuds adoptent le débit retenu DRFL en tant que débit courant DCFL de la voie d'acheminement concernée. Cette adoption de débit est accomplie en suivant les étapes suivantes E1A et E7 dans chaque noeud, et précède le changement de débit effectif ordonné par le terminal demandeur TR.

La cellule d'acquittement, différente d'une cellule de réservation, est extraite de la voie multiplex VME2 par le circuit de réception REC2 et appliquée aux premières entrées du circuit de comparaison CMP2 et aux entrées d'adresse de lecture de la mémoire de conversion M4 et de la mémoire de contexte MC. A l'étape E1A, le circuit de comparaison CMP2 reconnaît la cellule d'acquittement et applique le signal de confirmation de débit CD à la base de temps BT qui à l'étape suivante E7 commande des lectures et écritures dans les mémoires M4 et MC et le registre totaliseur RT, les autres mémoires M1, M2, M3 et MP n'intervenant pas.

L'étape E7 comprend trois sous-étapes quasi-simultanées E70, E71 et E72.

A la sous-étape E70, le mot de débit retenu en virgule flottante DRFL inclus dans la cellule d'acquittement reçue est converti en un mot de débit en virgule fixe DRFI lu dans la mémoire M4.

La sous-étape suivante E71 est relative à la mise à jour du total de débits TDAFI. Le mot lu DRFI est appliqué à travers les troisièmes entrées du multiplexeur MX2 aux premières entrées positives de l'additionneur ADD1. Les entrées négatives de l'additionneur ADD1 reçoivent le nouveau débit NDFI en tant que débit courant en cours d'acceptation DCFI précédemment inscrit dans la mémoire MC à la sous-étape de réservation E62. Le débit NDFI est lu dans une première partie de case de la mémoire MC adressée par l'identificateur de voie d'acheminement VPI/VCI contenue dans la cellule d'acquittement reçue. Dans l'additionneur ADD1, le total des débits TDAFI dernièrement calculé à la sous-étape E61 est mis à jour par l'opération cumulative :

$$TDAFI = DRFI - DCFI + TDAFI$$

de manière à soustraire le nouveau débit initialement retenu localement DCFI = NDFI et additionner le débit finalement retenu DRFI dans le total de débit écrit dans le registre totaliseur RT.

Le mot de débit retenu DRFI lu dans la mémoire de conversion M4 est également appliqué aux premières entrées de la mémoire de contexte MC à travers les quatrièmes entrées du multiplexeur MX1 à la sous-étape E72. Le mot de débit retenu DRFI est écrit dans la première partie de la case dans la mémoire MC adressée précédemment afin que le débit courant devienne prochainement le débit retenu.

Après que le débit retenu DRFI ait été enregistré en mémoire de contexte MC dans tous les noeuds de commutation de la voie d'acheminement concernée, et la cellule d'acquittement ait été reçue par le terminal demandeur TR, ce dernier procède au changement du débit courant DCFI en débit retenu DRFI et à la transmission de cellules au débit retenu DRFI.

D'une manière analogue à ce qui a été décrit précédemment relativement aux étapes E1R, E2 et E3, un mot indicateur de **diminution de débit** MF inclus dans une cellule de réservation de débit reçue par le premier circuit de réception REC1 déclenche une diminution de débit dans la base de temps BT en réponse au signal logique DD produit par le premier circuit de comparaison CMP1 (étape E1R). La base de temps BT commande une lecture dans la mémoire de conversion M2 afin de convertir le débit demandé en virgule flottante DDFL inclus dans la cellule de réservation de débit reçue en le débit demandé en virgule fixe DDFI (étape E2). A la suite de l'étape E2 est effectuée directement une étape E8 remplaçant les étapes E4, E5 et E6, comme indiqué par la ligne en trait interrompu court dans la figure 4.

Comme déjà dit, le mot indicateur de variation de débit MF n'est pas strictement nécessaire. Que ce mot MF soit inclus ou non dans la cellule de réservation reçue, l'étape E2 peut être complétée par la conversion du débit DDFL en débit DDFI dans la mémoire de conversion M1 et le calcul de la différence DELTA = DDFI - DCFI entre le débit DDFI lu dans la mémoire M1 et le débit DCFI lu dans une première partie de case dans la mémoire de contexte MC adressée par l'indicateur de voie d'acheminement VPI/VCI inclus dans la cellule de réservation reçue. Le bit de signe de la différence DELTA produite par le soustracteur SU, en l'occurrence correspondant à un signe négatif, est fourni à la base de temps BT à l'étape E3 de manière à déclencher l'étape suivante E8 sensiblement analogue à l'étape E6. A l'étape E8, un moyen de pondération comprenant la mémoire de pondération MP, le second additionneur ADD2 et la mémoire de conversion M3 n'intervient pas puisqu'une demande de diminution de débit n'est jamais contestée.

L'étape E8 comprend deux sous-étapes quasi-simultanées E81 et E82.

La sous-étape E81 consiste à mettre à jour le total des débits acceptés et en cours d'acceptation TDAFI pour des communications acheminées par la voie multiplex de sortie VMS2. Cette mise à jour est commandée par la base de temps BT qui sélectionne des secondes entrées du multiplexeur MX2 et commande une lecture de la case de la mémoire de contexte MC adressée par l'identificateur VPI/VCI dans la cellule de réservation concernée. Le débit demandé DDFI lu dans la mémoire M2 est appliqué aux premières entrées positives de l'additionneur ADD1, et le débit courant DCFI lu dans la mémoire MC est appliqué aux entrées négatives de l'additionneur ADD1. Le résultat de l'opération DDFI - DCFI + TDAFI est inscrit dans le registre totaliseur RT pour mettre à jour le total des débits acceptés et en cours d'acceptation.

Après sélection des troisièmes entrées du multiplexeur MX1 en même temps que les secondes entrées du multiplexeur MX2, le débit demandé DDFI lu en mémoire M2 est écrit dans la première partie de case de la mémoire de contexte MC adressée par l'identificateur de voie d'acheminement VPI/VCI à la sous-étape E82. Simultanément le débit courant DCFI précédant la demande de réservation est décalé dans la seconde partie de la case adressée de la mémoire MC, en tant qu'ancien débit courant ADCFI.

Puis, la cellule de réservation de débit avec le débit demandé inchangé DDFI, après traitement classique dans le circuit de transmission TRA2, est transmise dans la voie multiplex sortante VMS2 vers le prochain noeud de commutation en direction du terminal demandé TE, ou le cas échéant directement au terminal demandé TE. Comme précédemment à l'étape E7, le total des débits TDAFI est mis à jour dans le registre totaliseur RT (sous-étape 71), et le débit finalement retenu DRFI qui est retransmis dans une cellule d'acquittement par le terminal demandé TE et qui est a fortiori égal au débit demandé DDFI inférieur au débit courant DCFI est inscrit dans la mémoire de contexte MC, en réponse à la cellule d'acquittement dans chacun des noeuds de commutation de la voie d'acheminement concernée. A réception de la cellule d'acquittement, le terminal demandeur TR décide de transmettre des cellules au débit effectivement retenu DRFI = DDFI.

De préférence, la détection d'une cellule de réservation de débit par le premier circuit de comparaison CMP1 déclenche (étape E1RD ; figure 4) une **temporisation** prédéterminée dans la base de temps BT. La temporisation prédéterminée définit une durée prédéterminée à ne pas dépasser pour la réception de cellule d'acquittement devant succéder à celle de la cellule de réservation. Le noeud de commutation est ainsi protégé contre toute perte de cellule de réservation transmise jusqu'au terminal demandé TE et de cellule d'acquittement transmise depuis le terminal demandé TE jusqu'au noeud de commutation.

La temporisation prédéterminée peut être identique dans les noeuds de commutation. Selon une autre réalisation de l'invention, dans chacun des noeuds la durée de temporisation est calculée en fonction de l'identificateur VPI/VCI contenu dans la cellule de réservation reçue, c'est-à-dire en fonction de la voie multiplex sortante choisie VMS2. Selon encore une autre réalisation de l'invention, la temporisation est déterminée en fonction d'un mot de distance confondu avec le mot de temporisation TIM inclus dans la cellule de réservation et indiquant le nombre de noeuds de commutation restant à traverser par la cellule de réservation jusqu'à ce terminal demandé TE, ce nombre étant décrémenté d'une unité à chaque noeud traversé.

Si la cellule d'acquittement attendue en réponse à la cellule de réservation de débit (demande d'augmentation/diminution de débit) est détectée à l'étape E1A par le circuit de comparaison CMP2 avant l'expiration de la temporisation prédéterminée (étape E1AT), l'étape E7 est effectuée normalement.

A contrario, lorsqu'aucune cellule d'acquittement n'a été reçue à l'expiration de la temporisation prédéterminée (étape E1AT = OUI ET étape E1A = NON ; figure 4), le registre totaliseur RT et la mémoire de contexte MC sont remis en l'état précédant la demande de réservation de débit, au cours d'une étape E9. La base de temps BT sélectionne les quatrièmes entrées du multiplexeur MX2 et commande la lecture de la première partie de case dans la mémoire de contexte MC adressée en écriture à la sous-étape E62 ou E82. L'additionneur ADD1 additionne l'ancien débit courant ADCFI et soustrait le nouveau débit NDFI non retenu pour une demande d'augmentation de débit, ou le débit demandé DDFI non retenu pour une demande de diminution de débit, en tant que débit courant DCFI, au total des débits acceptés et en cours d'acceptation TDAFI dans le registre totaliseur RT. Puis, la base de temps BT sélectionne les premières entrées du multiplexeur MX1 reliées aux secondes sorties de la mémoire de contexte MC afin d'y opérer un transfert en sens inverse de celui effectué à la sous-étape E62 ou E82. L'ancien débit ADCFI lu dans la seconde partie de la case de mémoire adressée est alors écrit dans la première partie de cette case de mémoire, en tant que débit courant rétabli.

Toute cellule d'acquittement relative à la réservation de débit en cours qui est éventuellement reçue après l'expiration de la temporisation prédéterminée est détruite (étape E9D ; figure 4).

## Revendications

**1.** Procédé de réservation de débit dans des noeuds de commutation d'un réseau temporel asynchrone (ATM) qui sont traversés par une voie d'acheminement ayant un débit courant (DCFI) mémorisé dans les noeuds et s'étendant entre des premier et second terminaux (TR, TE), dans chaque noeud de commutation étant reçue une cellule de réservation qui contient un débit demandé (DDFI), qui a été transmise par le premier terminal (TR) à travers le réseau et qui est retransmise dans une voie multiplex sortante (VMS2) dudit chaque noeud ayant un débit maximum à travers le réseau vers le second terminal (TE), et dans chaque noeud de commutation étant reçue une cellule d'acquittement transmise par le second terminal (TE) vers le premier terminal (TR) à travers le réseau en réponse à la cellule de réservation retransmise dans la voie multiplex sortante,

caractérisé par les étapes suivantes dans chaque noeud de commutation lorsque le débit demandé (DDFI) contenu dans la cellule de réservation reçue par ledit chaque noeud de commutation est supérieur au débit courant (DCFI) :

- diminuer (E4, E5) le débit demandé (DDFI) en fonction de la différence (DELTA) entre le débit demandé (DDFI) et le débit courant (DCFI) et d'un total mémorisé (TDAFI) de débits acceptés et en cours d'acceptation relatifs à d'autres voies d'acheminement empruntant la voie multiplex sortante (VMS2) pour fournir un nouveau débit (NDFI) inférieur au débit demandé, même lorsque la différence entre le débit demandé (DDFI) et le débit courant (DCFI) est supérieure à la différence entre le débit maximum de la voie multiplex sortante (VMS2) et ledit total mémorisé (TDAFI) ;

- soustraire (E61) le débit courant (DCFI) au total mémorisé (TDAFI) pour fournir un premier total provisoire ;

- remplacer (E63) le débit demandé (DDFI) par le nouveau débit (NDFI) dans la cellule de réservation reçue ;

- transmettre la cellule de réservation contenant le nouveau débit (NDFI) dans la voie multiplex sortante (VMS2) à travers le réseau (ATM) en direction du second terminal (TE) ;

- additionner (E71) au premier total provisoire (TDAFI) le plus petit nouveau débit (DRFI) retenu dans lesdits noeuds de commutation traversés par la voie d'acheminement en réponse à une cellule d'acquittement qui contient ledit plus petit nouveau débit retenu (DRFI) et qui est transmise par le second terminal (TE) dès réception de la cellule de réservation contenant le plus petit nouveau débit retenu ; et

- mémoriser (E72) le plus petit nouveau débit retenu (DRFI) à la place du débit courant (DCFI).

2. Procédé conforme à la revendication 1, **caractérisé en ce qu'**à l'étape de diminuer (E4, E5), la différence entre le nouveau débit (NDFI) et le débit courant (DCFI) est inférieure à un débit disponible dans ledit chaque noeud de commutation égal à la différence entre le débit maximum de la voie multiplex sortante (VMS2) et ledit total mémorisé de débits accepté et en cours d'acceptation (TDAFI) et varie sensiblement en proportion du débit disponible.

3. Procédé conforme à la revendication 1 ou 2, **caractérisé par** les étapes suivantes dans ledit chaque noeud de commutation :

- additionner (E61) le nouveau débit (NDFI) et soustraire (E61) le débit courant (DCFI) au total mémorisé (TDAFI) pour fournir un second total provisoire, à la place de l'étape de soustraire ;

- mémoriser (E62) le débit courant (DCFI) à la place d'un ancien débit courant (ADCFI) qui était alloué à la voie d'acheminement précédemment à une allocation dudit débit courant (DCFI) à la voie d'acheminement, et mémoriser (E62) le nouveau débit (NDFI) à la place du débit courant (DCFI) ;

- additionner (E71) le plus petit nouveau débit retenu (DRFI) et soustraire (E71) le nouveau débit mémorisé (NDFI) au second total provisoire (TDAFI) en réponse à la cellule d'acquittement, à la place de l'étape d'additionner ; et

- mémoriser (E72) le plus petit nouveau débit retenu (DRFI) à la place du nouveau débit (NDFI), à la place de l'étape de mémoriser.

4. Procédé conforme à l'une quelconque des revendications 1 à 3, **caractérisé en ce qu'**il comprend les étapes suivantes dans ledit chaque noeud de commutation lorsque le débit demandé (DDFI) inclus dans la cellule de réservation reçue par ledit chacun des noeuds de commutation est inférieur au débit courant (DCFI) :

- soustraire (E81) le débit courant (DCFI) au total mémorisé (TDAFI) de débits acceptés et en cours d'acceptation relatifs à d'autres voies d'acheminement empruntant la voie multiplex sortante (VMS2) pour fournir un troisième total provisoire ;

- transmettre la cellule de réservation reçue contenant le débit demandé (DDFI) dans la voie multiplex sortante (VMS2) à travers le réseau (ATM) en direction du second terminal (TE) ;

- additionner (E71) le débit demandé (DDFI) au troisième total provisoire (TDAFI) en réponse à une cellule d'acquittement qui contient ledit débit demandé (DDFI) et qui est transmise par le second terminal (TE) dès réception de la cellule de réservation contenant le débit demandé ; et

- mémoriser (E72) le débit demandé (DDFI) à la place du débit courant (DCFI).

5. Procédé conforme à la revendication 4, **caractérisé par** les étapes suivantes dans ledit chaque noeud de commutation :

- additionner (E81) le débit demandé (DDFI) et soustraire (E81) le débit courant (DCFI) au total mémorisé (TDAFI) pour fournir un quatrième total provisoire, à la place de l'étape de soustraire selon la revendication 4 ;

- mémoriser (E82) le débit courant (DCFI) à la place d'un ancien débit courant (ADCFI) qui était alloué à la voie d'acheminement précédemment à une allocation dudit débit courant (DCFI) à la voie d'acheminement, et mémoriser (E82) le débit demandé (DDFI) à la place du débit courant (DCFI) ;

- additionner (E71) le débit demandé (DDFI) contenu dans la cellule d'acquittement et soustraire (E71) le débit demandé mémorisé (DDFI) au quatrième total provisoire (TDAFI) en réponse à la cellule d'acquittement, à la place de l'étape d'additionner, selon la revendication 4.

6. Procédé conforme à l'une quelconque des revendications 1 à 5, comprenant préalablement une étape (E3) de calcul de la différence (DELTA) entre le débit demandé contenu dans la cellule de réservation reçue (DDFI) et le débit courant mémorisé (DCFI) de manière à extraire le signe de la différence (DELTA),

lesdites étapes suivantes (E4 à E72) énoncées dans l'une quelconque des revendications 1 à 3 étant effectuées lorsque ledit signe de la différence est positif, et

lesdites étapes suivantes (E81 à E72) énoncées dans la revendication 4 ou 5 étant effectuées lorsque ledit signe de la différence est négatif.

7. Procédé conforme à l'une quelconque des revendications 1 à 5 comprenant préalablement une étape (E1R) de détection d'un mot de modification de débit (MF) dans la cellule de réservation reçue,

lesdites étapes suivantes (E4 à E72) énoncées dans l'une quelconque des revendications 1 à 3 étant effectuées lorsque ledit mot de modification de débit (MF) contient une demande d'augmentation de débit, et

lesdites étapes suivantes (E81 à E71) énoncées dans la revendication 4 ou 5 étant effectuées lorsque ledit mot de modification de débit (MF) contient une demande de diminution de débit.

8. Procédé conforme à la revendication 3, respectivement 5, **caractérisé par** les étapes suivantes :

- déclencher (E1RD) une temporisation prédéterminée en réponse à une cellule de réservation reçue par ledit chaque noeud de commutation ; et
- à l'expiration de la temporisation prédéterminée, lorsqu'aucune cellule d'acquittement relative à ladite voie d'acheminement n'a été reçue par ledit chacun des noeuds de commutation pendant la temporisation prédéterminée,
- additionner (E9) ledit ancien débit courant (ADCFI) et soustraire (E9) ledit nouveau débit mémorisé (NDFI) au second total provisoire (TDAFI), respectivement additionner (E9) ledit ancien débit courant (ADCFI) et soustraire (E9) ledit débit demandé mémorisé (DDFI) au quatrième total provisoire ; et
- mémoriser ledit ancien débit courant (ADCFI) à la place du nouveau débit mémorisé (NDFI), respectivement le débit demandé (DDFI).

9. Procédé conforme à la revendication 8, comprenant la destruction (E9D) de la cellule d'acquittement transmise par le second terminal (TE) lorsqu'elle est reçue par ledit chaque noeud de commutation après l'expiration de la temporisation prédéterminée.

10. Procédé conforme à la revendication 9, **caractérisé en ce que** la temporisation prédéterminée est variable en fonction du nombre de noeuds de commutation restant à traverser par la cellule de réservation reçue entre ledit chaque noeud de commutation et ledit second terminal (TE).

11. Dispositif de réservation de débit dans un noeud de commutation d'un réseau temporel asynchrone, comprenant un premier moyen d'entrée (REC1, CMP1) pour recevoir des cellules de réservation et y extraire respectivement des identificateurs (VPI/VCI) et des débits demandés (DDFI) pour des voies d'acheminement empruntant une voie multiplex sortante (VMS2) du noeud de commutation, un second moyen d'entrée (REC2, CMP2) pour recevoir des cellules d'acquittement et y extraire respectivement des identificateurs de voie d'acheminement (VPI/VCI), un premier moyen de sortie (TRA1) pour retransmettre des cellules d'acquittement, et un second moyen de sortie (TRA2) pour retransmettre des cellules de réservation dans ladite voie multiplex sortante (VMS2), et une mémoire de contexte (MC) mémorisant des débits adressés en lecture respectivement par les identificateurs de voie extraits,

**caractérisé en ce qu'**il comprend, en outre :

- un moyen (SU) pour soustraire un débit courant (DCFI) adressé en lecture dans la mémoire de contexte (MC) par l'identificateur (VPI/VCI) d'une voie d'acheminement donné extrait d'une cellule de réservation reçue par les premiers moyens d'entrée (REC1, CMP1), au débit demandé (DDFI) extrait de la cellule de réservation reçue de manière à fournir une différence (DELTA),
- un moyen (ADD1, RT) pour cumuler des débits acceptés et en cours d'acceptation relatifs aux voies d'acheminement empruntant la voie multiplex sortante (VMS2) en un total (TDAFI), et
- un moyen (MP, ADD2) sensible à la différence lorsqu'elle est positive et/ou à un mot de demande d'augmentation de débit contenu dans la cellule de réservation pour pondérer le débit demandé (DDFI) par un coefficient de pondération négatif (CP) qui dépend de ladite différence (DELTA) et dudit total (TDAFI) de manière à fournir un nouveau débit (NDFI) inférieur au débit demandé (DDFI), et afin que le moyen pour cumuler (ADD1, RT) soustrait ledit débit courant audit total pour fournir un premier total provisoire,
- les seconds moyens de sortie (TRA2) remplaçant le débit demandé (DDFI) par ledit nouveau débit (NDFI) dans la cellule de réservation reçue à retransmettre dans la voie multiplex sortante (VMS2), et

les seconds moyens d'entrée (REC2, CMP2) extrayant d'une cellule d'acquittement reçue un plus petit nouveau débit (DRFI) retenu dans les noeuds de commutation du réseau traversés par la voie d'acheminement donné, afin que le plus petit nouveau débit retenu (DRFI) soit additionné au premier total provisoire (TDAFI) dans les moyens pour cumuler (ADD1, RT) et écrit à la place du débit courant (DCFI) dans la mémoire de contexte (MC).

**12.** Dispositif conforme à la revendication 11, dans lequel le moyen pour pondérer comprend une mémoire de coefficients de pondération (MP) qui est adressée en lecture à la fois par des bits de poids fort dudit total (TDAFI) dans les moyens pour cumuler (ADD1, RT) et des bits de poids fort de ladite différence (DELTA), et un additionneur (ADD2) pour additionner le coefficient de pondération négatif (CP) lu dans la mémoire de pondération (MP) et le débit demandé (DDFI).

**13.** Dispositif conforme à la revendication 11 ou 12, dans lequel :

le moyen pour cumuler (ADD1, RT) à la fois additionne le débit demandé (DDFI) et soustrait le débit courant (DCFI) lu dans la mémoire de contexte audit total (TDAFI), et la mémoire de contexte (MC) mémorise le nouveau débit (NDFI) à la place du débit courant (DCFI) en réponse à la cellule de réservation reçue, et
le moyen pour cumuler (ADD1, RT) additionne le plus petit nouveau débit retenu (DRFI) et soustrait le nouveau débit (NDFI) audit total (TDAFI), et la mémoire de contexte (MC) mémorise le plus petit nouveau débit retenu (DRFI) à la place du nouveau débit (NDFI) en réponse à la cellule d'acquittement reçue.

**14.** Dispositif conforme à la revendication 11 ou 12, **caractérisé en ce que** la mémoire de contexte (MC) comprend des cases ayant chacune des première et seconde parties, des sorties de données des premières parties de case étant reliées directement à des entrées de données des secondes parties de case, et des sorties de données des secondes parties de case étant reliées à des entrées de données des premières parties de case à travers un moyen de sélection de débit (MX1),

relativement à une case de mémoire adressée par l'identificateur (VPI/VCI) de la voie d'acheminement donné :

le débit courant (DCFI) étant lu dans la première partie de la case de mémoire pour l'appliquer au moyen pour soustraire (SU),
le nouveau débit (NDFI) fourni par le moyen pour pondérer (MP, ADD2) étant additionné audit total auquel est soustrait ledit débit demandé (DDFI) dans le moyen pour cumuler (ADD1, RT) et étant écrit à travers le moyen de sélection de débit (MX1) dans la première partie de la case de mémoire quasi-simultanément au transfert du débit courant (DCFI) de la première partie vers la seconde partie de la case de mémoire à travers les sorties de données des premières parties et les entrées de données des secondes parties de la mémoire de contexte (MC), et
le plus petit nouveau débit retenu (DRFI) extrait de la cellule d'acquittement reçue étant additionné au et le nouveau débit (NDFI) lu dans la première partie de la case de mémoire étant soustrait du total (TDAFI) dans le moyen pour cumuler (ADD1, RT) quasi-simultanément à l'écriture du plus petit nouveau débit retenu (DRFI) dans la première partie de la case de mémoire à travers le moyen de sélection de débit (MX1).

**15.** Dispositif conforme à l'une quelconque des revendications 11 à 14, dans lequel

la mémoire de contexte (MC) mémorise le débit demandé (DCFI) extrait de la cellule de réservation, le moyen pour cumuler (ADD1, RT) soustrait le débit courant (DCFI) dudit total (TDAFI) et le second moyen de sortie (TRA2) transmet la cellule de réservation avec le débit demandé (DDFI) en réponse à une différence négative (DELTA) et/ou une demande de diminution de débit (MF) contenue dans la cellule de réservation, et
en réponse à une cellule d'acquittement reçue à la suite de la cellule de réservation avec le débit demandé (DDFI), le moyen pour cumuler (ADD1, RT) additionne le débit demandé extrait de la cellule d'acquittement reçue audit total (TDAFI).

**16.** Dispositif conforme aux revendications 14 et 15, dans lequel, relativement à une case de mémoire adressée par l'identificateur (VPI/VCI) de la voie d'acheminement et en réponse à une différence négative (DELTA) et/ou un mot de demande de diminution de débit (MF) dans la cellule de réservation,

le débit demandé (DDFI) est additionné au total (TDAFI) et le débit courant (DCFI) lu dans la première partie de la case de mémoire est soustrait du total (TDAFI) dans le moyen pour cumuler (ADD1, RT) quasi-simultanément à l'écriture du débit demandé (DDFI) dans la première case de mémoire à travers le moyen de sélection de débit (MX1) et au transfert du débit courant (DCFI) de la première partie vers la seconde partie de la case de mémoire à travers les sorties de données des premières parties et les entrées de données des secondes parties de la mémoire de contexte (MC), et
le débit demandé extrait de la cellule d'acquittement est additionné au total (TDAFI) et le débit demandé lu dans la première partie de la case de mémoire est soustrait audit total (TDAFI) dans le moyen pour cumuler (ADD1, TR) quasi-simultanément à l'écriture du débit demandé extrait de la cellule d'acquittement dans la première case de mémoire.

17. Dispositif conforme à la revendication 14 ou 16, dans lequel le contenu (ACDFI = DCFI) de la seconde partie de la case de mémoire est transféré dans la première partie de la case de mémoire à travers les sorties de données des secondes parties de la mémoire de contexte (MC), le moyen de sélection de débit (MX1) et les entrées de données des premières parties de la mémoire de contexte, et est additionné au total dans le moyen pour cumuler (ADD1, RT) simultanément à la soustraction du contenu (NDFI, DDFI) de la première partie de la case du total dans le moyen pour cumuler, à l'expiration d'une temporisation déclenchée par la cellule de réservation reçue par le premier moyen d'entrée (REC1, CMP1) lorsqu'aucune cellule d'acquittement n'a été reçue par le second moyen d'entrée (REC2, CMP2).

18. Dispositif conforme à l'une quelconque des revendications 11 à 17, comprenant un moyen (M1, M2) pour convertir un débit demandé exprimé en un premier code (DDFL) contenu dans une cellule de réservation en le débit demandé exprimé en un second code (DDFI) appliqué au moyen pour soustraire (SU) et à la mémoire de contexte (MC), un moyen (M3) pour convertir un nouveau débit exprimé en le premier code (NDFL) produit par les moyens de pondération (MP, ADD2) et appliqué au second moyen de sortie (TRA2) en le nouveau débit exprimé en le second code (NDFI) appliqué au moyen pour cumuler (ADD1, RT) et à la mémoire de contexte (MC), et un moyen (M4) pour convertir un débit exprimé en le premier code (DRFL) contenu dans une cellule d'acquittement en le débit retenu exprimé en le second code (DRFI) appliqué au moyen pour cumuler (ADD1, RT) et à la mémoire de contexte (MC).

**Patentansprüche**

1. Verfahren zur Durchsatzreservierung in Vermittlungsknoten eines temporären asynchronen Netzes (ATM), die von einem Leitweg mit einem aktuellen Durchsatz (DCFI) durchquert sind, der in den Knoten gespeichert ist und sich zwischen ersten und zweiten Endgeräten (TR, TE) erstreckt, wobei in jedem Vermittlungsknoten eine Reservierungszelle empfangen wird, die einen angeforderten Durchsatz (DDFI) enthält, der durch das Netz durch das erste Endgerät (TR) übertragen worden ist und der durch das Netz in einem Multiplexausgangskanal (VMS2) besagten jeden Knotens mit einem maximalen Durchsatz zum zweiten Endgerät (TE) rückübertragen wird, und wobei in jedem Vermittlungsknoten eine Bestätigungszelle empfangen wird, die durch das zweite Endgerät (TE) durch das Netz zum ersten Endgerät (TR) in Antwort auf die im Multiplexausgangskanal rückübertragene Reservierungszelle übertragen wurde;

    **gekennzeichnet durch** die folgenden Schritte in jedem Vermittlungsknoten, wenn der angeforderte Durchsatz (DDFI), der in der **durch** jeden Vermittlungsknoten empfangenen Reservierungszelle enthalten ist, größer als der aktuelle Durchsatz (DCFI) ist:

- Verringern (E4, E5) des angeforderten Durchsatzes (DDFI) abhängig von der Differenz (DELTA) zwischen dem angeforderten Durchsatz (DDFI) und dem aktuellen Durchsatz (DCFI) und einer gespeicherten Summe (TDAFI) von angenommenen und sich im Annahmeverlauf auf andere Leitwege beziehenden Durchsätzen, wobei der Multiplexausgangskanal (VMS2) übernommen wird, um einen neuen Durchsatz (NDFI) kleiner als der angeforderte Durchsatz zu liefern, sogar wenn die Differenz zwischen dem angeforderten Durchsatz (DDFI) und dem aktuellen Durchsatz (DCFI) größer als die Differenz zwischen dem maximalen Durchsatz des Multiplexausgangskanals (VMS2) und der gespeicherten Summe (TDAFI) ist;
- Subtrahieren (E61) des aktuellen Durchsatzes (DCFI) von der gespeicherten Summe (TDAFI), um eine erste provisorische Summe zu liefern;
- Ersetzen (E63) des angeforderten Durchsatzes (DDFI) **durch** den neuen Durchsatz (NDFI) in der empfangenen Reservierungszelle;
- Übertragen der den neuen Durchsatz (NDFI) enthaltenden Reservierungszelle im Multiplexausgangskanal (VMS2) **durch** das Netz (ATM) in Richtung auf das zweite Endgerät (TE);
- Addieren (E71) zur ersten provisorischen Summe (TDAFI) des kleinsten neuen Durchsatzes (DRFI), der in den von dem Leitweg durchquerten Vermittlungsknoten zurückgehalten worden ist, in Antwort auf eine Bestätigungszelle, die den zurückgehaltenen kleinsten neuen Durchsatz (DRFI) enthält und die **durch** das zweite Endgerät (TE) übertragen worden ist seit Empfang der Reservierungszelle, die den zurückgehaltenen kleinsten neuen Durchsatz enthält; und
- Speichern (E72) des zurückgehaltenen kleinsten neuen Durchsatzes (DRFI) an Stelle des aktuellen Durchsatzes (DCFI).

2. Verfahren nach Anspruch 1, **dadurch gekennzeichnet, daß** beim Verringerungsschritt (E4, E5) die Differenz zwischen dem neuen Durchsatz (NDFI) und dem aktuellen Durchsatz (DCFI) kleiner als ein in jedem Vermittlungsknoten verfügbarer Durchsatz gleich der Differenz zwischen dem maximalen Durchsatz des Multiplexausgangskanals (VMS2) und der angenommenen gespeicherten Summe von Durchsätzen und im Annahmeverlauf (TDAFI) ist und sich deutlich im Verhältnis zum verfügbaren Durchsatz ändert.

3. Verfahren nach Anspruch 1 oder 2, **gekennzeichnet durch** die folgenden Schritte in jedem Vermittlungsknoten:

   - Addieren (E61) des neuen Durchsatzes (NDFI) und Subtrahieren (E61) des aktuellen Durchsatzes (DCFI) von der gespeicherten Summe (TDAFI), um eine zweite provisorische Summe zu liefern, anstelle des Subtraktionsschritts;
   - Speichern (E62) des aktuellen Durchsatzes (DCFI) anstelle eines früheren aktuellen Durchsatzes (ADCFI), der dem Leitweg vorhergehend zu einer Zuweisung des aktuellen Durchsatzes (DCFI) zum Leitweg zugewiesen war, und Speichern (E62) des neuen Durchsatzes (NDFI) anstelle des aktuellen Durchsatzes (DCFI) ;
   - Addieren (E71) des zurückgehaltenen kleinsten neuen Durchsatzes (DRFI) und Subtrahieren (E71) des gespeicherten neuen Durchsatzes (NDFI) zur zweiten provisorischen Summe (TDAFI) in Antwort auf die Bestätigungszelle anstelle des Addierschritts; und
   - Speichern (E72) des zurückgehaltenen kleinsten neuen Durchsatzes (DRFI) an Stelle des neuen Durchsatzes (NDFI) anstelle des Speicherschritts.

4. Verfahren nach einem beliebigen der Ansprüche 1 bis 3, **dadurch gekennzeichnet, daß** er die folgenden Schritte in jedem Vermittlungsknoten umfaßt, wenn der in der von jedem der Vermittlungsknoten empfangenen Reservierungszelle enthaltene angeforderte Durchsatz (DDFI) kleiner als der aktuelle Durchsatz (DCFI) ist:

   - Subtrahieren (E81) des aktuellen Durchsatzes (DCFI) von der gespeicherten Summe (TDAFI) von angenommenen und im Annahmeverlauf sich auf andere Leitwege beziehenden Durchsätzen,
   wobei der Multiplexausgangskanal (VMS2) übernommen wird, um eine dritte provisorische Summe zu liefern;
   - Übertragen der empfangenen Reservierungszelle, die den angeforderten Durchsatz (DDFI) enthält, im Ausgangsmultiplexkanal (VMS2) durch das Netz (ATM) in Richtung auf das zweite Endgerät (TE) ;
   - Addieren (E71) des angeforderten Durchsatzes (DDFI) zur dritten provisorischen Summe (TDAFI) in Antwort auf eine Bestätigungszelle, die den angeforderten Durchsatz (DDFI) enthält und die durch das zweite Endgerät (TE) übertragen wird, seit Empfang der Reservierungszelle, die den angeforderten Durchsatz enthält; und
   - Speichern (E72) des angeforderten Durchsatzes (DDFI) anstelle des aktuellen Durchsatzes (DCFI).

5. Verfahren nach Anspruch 4, **gekennzeichnet durch** die folgenden Schritte in jedem Vermittlungsknoten:

   - Addieren (E81) des angeforderten Durchsatzes (DDFI) und Subtrahieren (E81) des aktuellen Durchsatzes (DCFI) von der gespeicherten Summe (TDAFI), um eine vierte provisorische Summe zu liefern, an Stelle des Subtraktionsschritts nach Anspruch 4;
   - Speichern (E82) des aktuellen Durchsatzes (DCFI) an Stelle eines früheren aktuellen Durchsatzes (ADCFI), der dem Leitweg vorhergehend zu einer Zuweisung des aktuellen Durchsatzes (DCFI) zum Leitweg zugewiesen war, und Speichern (E82) des angeforderten Durchsatzes (DDFI) an Stelle des aktuellen Durchsatzes (DCFI) ;
   - Addieren (E71) des angeforderten Durchsatzes (DDFI), der in der Bestätigungszelle enthalten ist, und Subtrahieren (E71) des gespeicherten angeforderten Durchsatzes (DDFI) von der vierten provisorischen Summe (TDAFI) in Antwort auf die Bestätigungszelle anstelle des Addierschritts nach Anspruch 4.

6. Verfahren nach einem beliebigen der Ansprüche 1 bis 5, umfassend zuvor einen Schritt (E3) zur Berechnung der Differenz (DELTA) zwischen dem angeforderten Durchsatz, der in der empfangenen Reservierungszelle (DDFI) enthalten ist, und dem gespeicherten aktuellen Durchsatz (DCFI) derart, daß das Vorzeichen der Differenz (DELTA) ausgegeben wird,
   wobei die folgenden Schritte (E4 bis E72), die in einem beliebigen der Ansprüche 1 bis 3 angegeben worden sind, ausgeführt werden, wenn das Vorzeichen der Differenz positiv ist, und
   wobei die folgenden Schritte (E81 bis E72), die im Anspruch 4 oder 5 angegeben worden sind, ausgeführt werden, wenn das Vorzeichen der Differenz negativ ist.

7. Verfahren nach einem beliebigen der Ansprüche 1 bis 5, umfassend zuvor einen Schritt (E1R) zur Detektion eines Durchsatzmodifikationsworts (MF) in der empfangenen Reservierungszelle,

wobei die folgenden Schritte (E4 bis E72), die in einem beliebigen der Ansprüche 1 bis 3 angegeben worden sind, ausgeführt werden, wenn das Durchsatzmodifikationswort (MF) eine Durchsatzerhöhungsanforderung enthält, und

wobei die folgenden Schritte (E81 bis E71), die im Anspruch 4 oder 5 angegeben sind, ausgeführt werden, wenn das Durchsatzmodifikationswort (MF) eine Durchsatzverringerungsanforderung enthält.

8. Verfahren nach Anspruch 3 bzw. 5, **gekennzeichnet durch** die folgenden Schritte:

   - Auslösen (E1RD) einer vorbestimmten Verzögerung in Antwort auf eine **durch** jeden Vermittlungsknoten empfangene Reservierungszelle; und
   - bei Ablauf der vorbestimmten Verzögerung, wenn keine Bestätigungszelle bezüglich des Leitweges **durch** jeden der Vermittlungsknoten während der vorbestimmten Verzögerung empfangen worden ist,
   - Addieren (E9) des früheren aktuellen Durchsatzes (ADCFI) und Subtrahieren (E9) des gespeicherten neuen Durchsatzes (NDFI) zur zweiten provisorischen Summe (TDAFI) bzw. Addieren (E9) des früheren aktuellen Durchsatzes (ADCFI) und Subtrahieren (E9) des gespeicherten angeforderten Durchsatzes (DDFI) von der vierten provisorischen Summe; und
   - Speichern des früheren aktuellen Durchsatzes (ADCFI) an Stelle des gespeicherten neuen Durchsatzes (NDFI) bzw. des angeforderten Durchsatzes (DDFI).

9. Verfahren nach Anspruch 8, umfassend die Zerstörung (E9D) der durch das zweite Endgerät (TE) übertragenen Bestätigungszelle, wenn sie durch den zweiten Vermittlungsknoten nach Ablauf der vorbestimmten Verzögerung empfangen worden ist.

10. Verfahren nach Anspruch 9, **dadurch gekennzeichnet, daß** die vorbestimmte Verzögerung variabel abhängig von der Zahl von Vermittlungsknoten ist, die durch die empfangene Reservierungszelle zwischen jedem Vermittlungsknoten und dem zweiten Endgerät (TE) zu durchqueren bleibt.

11. Vorrichtung zur Durchsatzreservierung in einem Vermittlungsknoten eines temporären asynchronen Netzes, umfassend ein erstes Eingangsmittel (REC1, CMP1), um Reservierungszellen zu empfangen und dort jeweils Kennzeichen (VPI/VCI) zu extrahieren, und angeforderte Durchsätze (DDFI) für Leitwege, wobei ein Multiplexausgangskanal (VMS2) des Vermittlungsknotens übernommen wird, ein zweites Eingangsmittel (REC2, CMP2) zum Empfangen der Bestätigungszellen und dort jeweils Herausziehen der Kennzeichen für den Leitweg (VPI/VCI), ein erstes Ausgangsmittel (TRA1) zur Rückübertragung der Bestätigungszellen und ein zweites Ausgangsmittel (TRA2) zur Rückübertragung der Reservierungszellen im Multiplexausgangskanal (VMS2) und einen Kontextspeicher (MC), der adressierte Durchsätze beim Lesen jeweils durch die extrahierten Kanalkennzeichen speichert,

**dadurch gekennzeichnet, daß** sie außerdem umfaßt:

   - ein Mittel (SU) zum Subtrahieren eines aktuellen Durchsatzes (DCFI), der beim Lesen im Kontextspeicher (MC) durch das Kennzeichen (VPI/VCI) eines gegebenen Leitweges adressiert worden ist, extrahiert aus einer durch die ersten Eingangsmittel (REC1, CMP1) empfangenen Reservierungszelle, vom angeforderten Durchsatz (DDFI), der aus der empfangenen Reservierungszelle extrahiert worden ist derart, daß eine Differenz (DELTA) geliefert wird,
   - ein Mittel (ADD1, RT) zum Kumulieren der angenommenen und im Annahmeverlauf sich auf Leitwege beziehenden Durchsätze, wobei der Multiplexausgangskanal (VMS2) übernommen wird, zu einer Summe (TDAFI) und
   - ein Mittel (MP, ADD2) empfindlich auf die Differenz, wenn sie positiv ist, und/oder auf ein Durchsatzerhöhungsanforderungswort, das in der Reservierungszelle enthalten ist, um den angeforderten Durchsatz (DDFI) durch einen negativen Gewichtungskoeffizienten (CP) zu gewichten, der von der Differenz (DELTA) und der Summe (TDAFI) abhängig ist derart, daß ein neuer Durchsatz (NDFI) kleiner als der angeforderte Durchsatz (DDFI) geliefert wird, und damit das Mittel zum Kumulieren (ADD1, RT) den aktuellen Durchsatz von der Summe subtrahiert, um eine erste provisorische Summe zu liefern,
   - wobei die zweiten Ausgangsmittel (TRA2) den angeforderten Durchsatz (DDFI) durch den neuen Durchsatz (NDFI) in der empfangenen Reservierungszelle ersetzen zum Rückübertragen im Multiplexausgangskanal (VMS2), und

wobei die zweiten Eingangsmittel (REC2, CMP2) aus der empfangenen Bestätigungszelle einen kleineren neuen Durchsatz (DRFI) extrahieren, der in den durch den gegebenen Leitweg durchquerten Vermittlungsknoten des Netzes zurückgehalten worden ist, damit der zurückgehaltene kleinste neue Durchsatz (DRFI) zur ersten provisorischen Summe (TDAFI) in den Mitteln zum Kumulieren (ADD1, RT) addiert wird und anstelle des aktuellen Durchsatzes (DCFI) im Kontextspeicher (MC) geschrieben wird.

**12.** Vorrichtung nach Anspruch 11, in dem das Mittel zum Gewichten einen Gewichtungskoeffizientenspeicher (MP) umfaßt, der beim Lesen zugleich der höchstwertigen Bits der Summe (TDAFI) in den Mitteln zum Kumulieren (ADD1, RT) und der höchstwertigen Bits der Differenz (DELTA) und einen Addierer (ADD2) zum Addieren des negativen Gewichtungskoeffizienten (CP), der im Gewichtungsspeicher (MP) gelesen worden ist, und des angeforderten Durchsatzes (DDFI).

**13.** Vorrichtung nach Anspruch 11 oder 12, in der:

das Mittel zum Kumulieren (ADD1, RT) zugleich den angeforderten Durchsatz (DDFI) addiert und den im Kontextspeicher gelesenen Durchsatz (DCFI) von der Summe (TDAFI) subtrahiert und der Kontextspeicher (MC) den neuen Durchsatz (NDFI) an Stelle des aktuellen Durchsatzes (DCFI) in Antwort auf die empfangene Reservierungszelle speichert und
das Mittel zum Kumulieren (ADD1, RT) den zurückgehaltenen kleinsten neuen Durchsatz (DRFI) addiert und den neuen Durchsatz (NDFI) von der Summe (TDAFI) subtrahiert und der Kontextspeicher (MC) den zurückgehaltenen kleinsten neuen Durchsatz (DRFI) an Stelle des neuen Durchsatzes (NDFI) in Antwort auf die empfangene Bestätigungszelle speichert.

**14.** Vorrichtung nach Anspruch 11 oder 12, **dadurch gekennzeichnet, daß** der Kontextspeicher (MC) Fächer umfaßt, die jeweils erste und zweite Teile aufweisen, wobei Datenausgänge der ersten Fachteile direkt mit Dateneingängen der zweiten Fachteile verbunden sind, und Datenausgänge der zweiten Fachteile mit Dateneingängen der ersten Fachteile über ein Durchsatzauswahlmittel (MX1) verbunden sind,
mit Bezug auf ein durch das gegebene Kennzeichen (VPI/VCI) des Leitweges adressiertes Speicherfach:
wobei der aktuelle Durchsatz (DCFI) im ersten Teil des Speicherfachs gelesen wird, um ihn auf das Mittel zum Subtrahieren (SU) anzuwenden,
wobei der durch das Mittel zum Gewichten (MP, ADD2) gelieferte neue Durchsatz (NDFI) zu der Summe addiert wird, von der der angeforderte Durchsatz (DDFI) subtrahiert wird, im Mittel zum Kumulieren (ADD1, RT), und wobei durch das Durchsatzauswahlmittel (MX1) im ersten Teil des Speicherfachs quasi gleichzeitig zur Übergabe des aktuellen Durchsatzes (DCFI) vom ersten Teil zum zweiten Teil des Speicherfachs durch die Datenausgänge der ersten Teile und die Dateneingänge der zweiten Teile des Kontextspeichers (MC) geschrieben wird und
wobei der aus der empfangenen Bestätigungszelle extrahierte zurückgehaltene kleinste neue Durchsatz (DRFI) zu dem neuen Durchsatz (NDFI) addiert wird, der im ersten Teil des Speicherfachs gelesen worden ist, wobei er von der Summe (TDAFI) im Mittel zum Kumulieren (ADD1, RT) quasi gleichzeitig zum Schreiben des zurückgehaltenen kleinsten neuen Durchsatzes (DRFI) im ersten Teil des Speicherfachs durch das Durchsatzauswahlmittel (MX1) subtrahiert wird.

**15.** Vorrichtung nach einem beliebigen der Ansprüche 11 bis 14, in dem:

der Kontextspeicher (MC) den angeforderten Durchsatz (DCFI) speichert, der von der Reservierungszelle extrahiert worden ist, das Mittel zum Kumulieren (ADD1, RT) den aktuellen Durchsatz (DCFI) von der Summe (TDAFI) subtrahiert und das zweite Ausgangsmittel (TRA2) die Reservierungszelle mit dem angeforderten Durchsatz (DDFI) in Antwort auf eine negative Differenz (DELTA) und/oder eine Durchsatzverringerungsanforderung (MF) überträgt, die in der Reservierungszelle enthalten ist, und
in Antwort auf eine nach der Reservierungszelle mit dem angeforderten Durchsatz (DDFI) empfangene Bestätigungszelle, das Mittel zum Kumulieren (ADD1, RT) den angeforderten Durchsatz zu der Summe (TDAFI) addiert, der aus der empfangenen Bestätigungszelle extrahiert worden ist.

**16.** Vorrichtung nach den Ansprüchen 14 und 15, in der bezüglich eines durch das Kennzeichen (VPI/VCI) des Leitweges adressierten Speicherfachs und in Antwort auf eine negative Differenz (DELTA) und/oder ein Durchsatzverringerungsanforderungswort (MF) in der Reservierungszelle,
der angeforderte Durchsatz (DDFI) zur Summe (TDAFI) addiert wird und der in dem ersten Teil des Speicherfachs gelesene aktuelle Durchsatz (DCFI) von der Summe (TDAFI) in dem Mittel zum Kumulieren (ADD1, RT) quasi gleichzeitig zum Schreiben des angeforderten Durchsatzes (DDFI) im ersten Speicherfach durch das Mittel zur Durchsatzauswahl (MX1) und zur Übergabe des aktuellen Durchsatzes (DCFI) des ersten Teils zum zweiten Teil des Speicherfachs durch die Datenausgänge der ersten Teile und die Dateneingänge der zweiten Teile des Kontextspeichers (MC) subtrahiert wird und

der aus der Bestätigungszelle extrahierte angeforderte Durchsatz zur Summe (TDAFI) addiert wird und der in dem ersten Teil des Speicherfachs gelesene angeforderte Durchsatz von der Summe (TDAFI) im Mittel zum Kumulieren (ADD1, TR) quasi gleichzeitig zum Schreiben des angeforderten Durchsatzes, der aus der Bestätigungszelle extrahiert worden ist, im ersten Speicherfach subtrahiert wird.

17. Vorrichtung nach Anspruch 14 oder 16, in der der Inhalt (ACDFI = DCFI) des zweiten Teils des Speicherfachs im ersten Teil des Speicherfachs durch die Datenausgänge der zweiten Teile des Kontextspeichers (MC), das Durchsatzauswahlmittel (MX1) und die Dateneingänge der ersten Teile des Kontextspeichers übergeben wird, und zur Summe im Mittel zum Kumulieren (ADD1, RT) gleichzeitig zur Subtraktion des Inhalts (NDFI, DDFI) des ersten Teils des Fachs von der Summe im Mittel zum Kumulieren addiert wird, mit Ablauf einer Verzögerung ausgelöst durch die durch das erste Eingangsmittel (REC1, CMP1) empfangene Reservierungszelle, wenn keine Bestätigungszelle durch das zweite Eingangsmittel (REC2, CMP2) empfangen worden ist.

18. Vorrichtung nach einem beliebigen der Ansprüche 11 bis 17, umfassend ein Mittel (M1, M2) zum Konvertieren eines in einem ersten Code (DDFL) ausgedrückten angeforderten Durchsatzes, der in einer Reservierungszelle enthalten ist, zu dem angeforderten Durchsatz, ausgedrückt in einem zweiten Code (DDFI), der auf das Mittel zum Subtrahieren (SU) und den Kontextspeicher gegeben wird, ein Mittel (M3) zum Konvertieren eines neuen Durchsatzes, ausgedrückt im ersten Code (NDFL), der durch die Gewichtungsmittel (MP, ADD2) erzeugt wird und auf das zweite Ausgangsmittel (TRA2) als neuer Durchsatz gegeben wird, ausgedrückt im zweiten Code (NDFI), gegeben auf das Mittel zum Kumulieren (ADD1, RT) und den Kontextspeicher (MC) und ein Mittel (M4) zum Konvertieren eines im ersten Code (DRFL) ausgedrückten Durchsatzes, der in einer Bestätigungszelle enthalten ist, zu einem zurückgehaltenen Durchsatz, ausgedrückt im zweiten Code (DRFI), gegeben auf das Mittel zum Kumulieren (ADD1, RT) und den Kontextspeicher (MC).

**Claims**

1. Method of bit rate reservation at switching nodes of an asynchronous transfer mode network (ATM) through which passes a routing channel having a current bit rate (DCFI) stored in the nodes and extending between first and second terminals (TR, TE), a reservation cell containing a requested bit rate (DDFI) being received in each switching node, said reservation cell having been transmitted from the first terminal (TR) through the network and being retransmitted on an outgoing multiplex channel (VMS2) from said each said node having a maximum bit rate through the network to the second terminal (TE), and an acknowledgment cell being received in each switching node, said acknowledgment cell being transmitted from the second terminal (TE) to the first terminal (TR) through the network in response to the reservation cell retransmitted on the outgoing multiplex channel,

**characterized by** the following steps in each switching node if the requested bit rate (DDFI) contained in the reservation cell received by each said switching node is greater than the current bit rate (DCFI):

- decreasing (E4, E5) the requested bit rate (DDFI) as function of the difference (DELTA) between the requested bit rate (DDFI) and the current bit rate (DCFI) and a stored total (TDAFI) of bit rates accepted and in process of acceptance relating to other routing channels using the outgoing multiplex channel (VMS2) to provide a new bit rate (NDFI) lower than the requested bit rate, even when the difference between the requested bit rate (DDFI) and the current bit rate (DCFI) is higher than the difference between the maximum bit rate of the outgoing multiplex channel (VMS2) and said stored total (TDAFI);
- subtracting (E61) the current bit rate (DCFI) from the stored total (TDAFI) to provide a first temporary total;
- replacing (E63) the requested bit rate (DDFI) by the new bit rate (NDFI) in the received reservation cell;
- transmitting the reservation cell containing the new bit rate (NDFI) on the outgoing multiplex channel (VMS2) through the network (ATM) to the second terminal (TE);
- adding (E71) to the first temporary total (TDAFI) the lower new bit rate (DRFI) adopted at said switching nodes through which the routing channel passes in response to an acknowledgment cell that contains said adopted lower new bit rate (DRFI) and that is transmitted by the second terminal (TE) on receipt of the reservation cell containing the adopted lower new bit rate; and
- storing (E72) the adopted lower new bit rate (DRFI) in place of the current bit rate (DCFI).

2. Method according to claim 1, **characterized in that** during the step of decreasing (E4, E5), the difference between the new bit rate (NDFI) and the current bit rate (DCFI) is less than a bit rate available at each said switching node equal to the difference between the maximum bit rate of the outgoing multiplex channel (VMS2) and said stored total of bit rates accepted and in process of acceptance (TDAFI) and varies substantially in proportion to the available bit rate.

3. Method according to claim 1 or 2, **characterized by** the following steps at each said switching node:

   - in place of the step of subtracting, adding (E61) the new bit rate (NDFI) and subtracting (E61) the current bit rate (DCFI) from the stored total (TDAFI) to provide a second temporary total;
   - storing (E62) the current bit rate (DCFI) in place of an old current bit rate (ADCFI) that was allocated to the routing channel previously to an allocation of said current bit rate (DCFI) to the routing channel, and storing (E62) the new bit rate (NDFI) in place of the current bit rate (DCFI);
   - in place of the step of adding, adding (E71) the adopted lower new bit rate (DRFI) and subtracting (E71) the stored new bit rate (NDFI) from the second temporary total (TDAFI) in response to the acknowledgment cell; and
   - in place of the step of storing, storing (E72) the adopted lower new bit rate (DRFI) in place of the new bit rate (NDFI).

4. Method according to any one of claims 1 to 3, **characterized in that** it comprises the following steps at each said switching node if the requested bit rate (DDFI) included in the reservation cell received by each said switching node is less than the current bit rate (DCFI) :

   - subtracting (E81) the current bit rate (DCFI) from the stored total (TDAFI) of bit rates accepted and in process of acceptance relating to others routing channels using the outgoing multiplex channel (VMS2) to provide a third temporary total;
   - transmitting the received reservation cell containing the requested bit rate (DDFI) on the outgoing multiplex channel (VMS2) through the network (ATM) to the second terminal (TE);
   - adding (E71) the requested bit rate (DDFI) to the third temporary total (TDAFI) in response to an acknowledgment cell that contains said requested bit rate (DDFI) and that is transmitted by the second terminal (TE) on receipt of the reservation cell containing the requested bit rate; and
   - storing (E72) the requested bit rate (DDFI) in place of the current bit rate (DCFI).

5. The method according to claim 4, **characterized in that** the following steps are effected at each said switching node:

   - in place of the step of subtracting according to claim 4, adding (E81) the requested bit rate (DDFI) and subtracting (E81) the current bit rate (DCFI) from the stored total (TDAFI) to provide a fourth temporary total;
   - storing (E82) the current bit rate (DCFI) in place of an old current bit rate (ADCFI) that was allocated to the routing channel previously to an allocation of said current bit rate (DCFI) to the routing channel, and storing (E82) the requested bit rate (DDFI) in place of the current bit rate (DCFI);
   - in place of the step of adding according to claim 4, adding (E71) the requested bit rate (DDFI) contained in the acknowledgment cell and subtracting (E71) the stored requested bit rate (DDFI) from the fourth temporary total (TDAFI) in response to the acknowledgment cell.

6. Method according to any one of claims 1 to 5, comprising prior to a step (E3) of calculating the difference (DELTA) between the requested bit rate contained in the received reservation cell (DDFI) and the stored current bit rate (DCFI) in order to extract the sign of the difference (DELTA),
   said following steps (E4 to E72) stated in any one of claims 1 to 3 being done if said sign of the difference is positive, and
   said following steps (E81 to E72) stated in the claim 4 or 5 being done if said sign of the difference is negative.

7. Method according to any one of claims 1 to 5, comprising prior to a step (E1R) of detecting a bit rate modification word (MF) in the received reservation cell,
   said following steps (E4 to E72) stated in any one of claims 1 to 3 being done if said bit rate modification word (MF) contains a bit rate increase request, and
   said following steps (E81 to E72) stated in the claim 4 or 5 being done if said bit rate modification word (MF) contains a bit rate decrease request.

8. Method according to claim 3, respectively 5, **characterized in that** the following steps:

   - initiating (B1RD) a predetermined time-delay in response to a reservation cell received at each said switching node; and
   - before the expiry of the predetermined time-delay, if no acknowledgment cell relating to said routing channel has been received at each said switching node during the predetermined time-delay:

- adding (E9) said old current bit rate (ADCFI) and subtracting (E9) said stored new bit rate (NDFI) from second temporary total (TDAFI), respectively adding (E9) said old current bit rate (ADCFI) and subtracting (E9) said stored requested bit rate (DDFI) to the fourth provisory total; and
- storing said old current bit rate (ADCFI) in place of the stored new bit rate (NDFI), respectively the requested bit rate (DDFI).

9. Method according to claim 8, comprising a step of destroying (E9D) of the acknowledgment cell transmitted by the second terminal (TE) if the latter is received at each said switching node after expiry of the predetermined time-delay.

10. Method according to claim 9, **characterized in that** the predetermined time-delay is varied according to the number of switching nodes that the reservation cell received still has to pass through between each said switching node and said second terminal (TE).

11. Bit rate reservation device at a switching node of an asynchronous transfer mode network, comprising first input means (REC1, CMP1) for receiving reservation cells and for extracting therefrom respectively identifiers (VPI/VCI) and requested bit rates (DDFI) for routing channels using an outgoing multiplex channel (VMS2) from the switching node, second input means (REC2, CMP2) for receiving acknowledgment cells and for extracting therefrom respectively identifiers from routing channel (VPI/VCI), first output means (TRA1) for retransmitting acknowledgment cells, and second output means (TRA2) for retransmitting reservation cells on said outgoing multiplex channel (VMS2), and a context memory (MC) storing bit rates read-addressed by the extracted channel identifiers respectively, **characterized in that** it comprises, further:

- means (SU) for subtracting a current bit rate (DCFI) read-addressed in the context memory (MC) by the identifier (VPI/VCI) of a given routing channel extracted from a reservation cell received by the first input means (REC1, CMP1), from the requested bit rate (DDFI) extracted from the received reservation cell to provide a difference (DELTA),
- means (ADD1, RT) for cumulating bit rates accepted and in the process of acceptance relating to the routing channels using the outgoing multiplex channel (VMS2) to provide a total (TDAFI), and
- means (MP, ADD2) responsive to the difference when the difference is positive and/or to a bit rate increase request word contained in the reservation cell for weighting the requested bit rate (DDFI) by a negative weighting coefficient (CP) that depends on said difference (DELTA) and on said total (TDAFI) to provide a new bit rate (NDFI) lower than the requested bit rate (DDFI), and whereby the cumulating means (ADD1, RT) subtracts said current bit rate from said total to provide a first temporary total,

- the second output means (TRA2) replacing the requested bit rate (DDFI) by said new bit rate (NDFI) in the received reservation cell to be retransmitted on the outgoing multiplex channel (VMS2), and
- the second input means (REC2, CMP2) extracting from a received acknowledgment cell a lower new bit rate (DRFI) adopted at the switching nodes of the network through which the given routing channel passes so that the adopted lower new bit rate (DRFI) is added to the first temporary total (TDAFI) in the cumulating means (ADD1, RT) and written in place of the current bit rate (DCFI) into the context memory (MC).

12. Device according to claim 11, wherein the weighting means comprises a weighting coefficient memory (MP) which is read-addressed by more significant bits of said total (TDAFI) in the cumulating means (ADD1, RT) and more significant bits of said difference (DELTA), and an adder (ADD2) for. adding the negative weighting coefficient (CP) read from the weighting memory (MP) and the requested bit rate (DDFI).

13. Device according to claim 11 or 12, wherein:

the cumulating means (ADD1, RT) both adds the requested bit rate (DDFI) and subtract the current bit rate (DCFI) read from the context memory from said total (TDAFI), and the context memory (MC) stores the new bit rate (NDFI) in place of the current bit rate (DCFI) in response to the received reservation cell, and the cumulating means (ADD1, RT) adds the adopted lower new bit rate (DRFI) and subtract the new bit rate (NDFI) from said total (TDAFI), and the context memory (MC) stores the adopted lower new bit rate (DRFI) in place of the new bit rate (NDFI) in response to the received acknowledgment cell.

14. Device according to claim 11 or 12, **characterized in that** the context memory (MC) comprises locations each having first and second parts, data outputs from first location parts being connected directly to data inputs to second location parts, and data outputs from second location parts being connected to data inputs to first location parts through a bit rate selecting means (MX1),

relative to a memory location addressed by the identifier (VPI/VCI) of the given routing channel :

the current bit rate (DCFI) being read in the first part of the memory location to apply it to the subtracting means (SU),

the new bit rate (NDFI) provided by the weighting means (MP, ADD2) being added to said total from which said requested bit rate (DDFI) is subtracted in the cumulating means (ADD1, RT) and being written via the bit rate selecting means (MX1) into the first part of the memory location substantially simultaneously with transfer of the current bit rate (DCFI) from the first part to the second part of the memory location via the data outputs of first parts and the data inputs of second parts of the context memory (MC), and

the adopted lower new bit rate (DRFI) extracted from the received acknowledgment cell being added to the total in the cumulating means (ADD1, RT) and the new bit rate (NDFI) read in the first part of the memory location being subtracted from the total (TDAFI) in the cumulating means (ADD1, RT), substantially simultaneously with writing of the adopted lower new bit rate (DRFI) in the first part of the memory location through the bite rate selecting means (MX1).

15. Device according to any one of claims 11 to 14, wherein

the context memory (MC) stores the requested bit rate (DCFI) extracted from the reservation cell, the cumulating means (ADD1, RT) subtracts the current bit rate (DCFI) from said total (TDAFI) and the second output means (TRA2) transmits the reservation cell with the requested bit rate (DDFI) in response to a difference negative (DELTA) and/or a bit rate decrease request (MF) contained in the reservation cell, and

in response to an acknowledgment cell received after the reservation cell with the requested bit rate (DDFI), the cumulating means (ADD1, RT) adds the requested bit rate extracted from the received acknowledgment cell to said total (TDAFI).

16. Device according to claims 14 and 15, wherein relative to a memory location addressed by the identifier (VPI/VCI) of the given routing channel and in response to a negative difference (DELTA) and/or a word of bit rate decrease request (MF) in the reservation cell,

the requested bit rate (DDFI) is added to the total (TDAFI) and the current bit rate (DCFI) read in the first part of the memory location is subtracted from the total (TDAFI) in the cumulating means (ADD1, RT) substantially simultaneously with writing the requested bit rate (DDFI) into the first memory location through the bit rate selecting means (MX1) and transfer of the current bit rate (DCFI) from the first part to the second part of the memory location through the data outputs of first parts and the data inputs of second parts of the context memory (MC), and

the requested bit rate extracted from the acknowledgment cell is added to the total (TDAFI) and the requested bit rate read in the first part of the memory location is subtracted from said total (TDAFI) in the cumulating means (ADD1, TR) substantially simultaneously with writing rate extracted from the acknowledgment memory location.

17. Device according to claim 14 or 16, wherein the content (ACDFI = DCFI) of the second part of the memory location is transferred into the first part of the memory location through the data outputs of the second parts of the context memory (MC), the bit rate selecting means (MX1) and the data inputs of first parts of the context memory, and is added to total in the cumulating means (ADD1, RT) simultaneously with the subtraction of content (NDFI, DDFI) of the first part of the location from the total in the cumulating means, at expiry of a predetermined time-delay initiated by the reservation cell received by the first input means (REC1, CMP1) if no acknowledgment cell has been received by the second input means (REC2, CMP2).

18. Device according to any one of claims 11 to 17, comprising means (M1, M2) for converting a requested bit rate expressed in a first code (DDFL) contained in a reservation cell into the requested bit rate expressed in a second code (DDFI) applied to subtracting means (SU) and to the context memory (MC), means (M3) for converting a new bit rate expressed in the first code (NDFL) provided by the weighting means (MP, ADD2) and applied to the second output means (TRA2) into the new bit rate expressed in the second code (NDFI) applied to the cumulating means (ADD1, RT) and to the context memory (MC), and means (M4) for converting a bit rate expressed in the first code (DRFL) contained in an acknowledgment cell into the adopted bit rate expressed in the second code (DRFI) applied to the cumulating means (ADD1, RT) and to the context memory (MC).

# FIG.1
## (TECHNIQUE ANTERIEURE)

Vers terminaux d'usagers

UNI

TR

COM

20

NNI

11

CONDUIT VIRTUEL

UNI

30

COM

31

Vers terminaux d'usagers

21

VOIES VIRTUELLES

BRASSEUR

10

12

BRASSEUR

RESEAU BRASSE

BRASSEUR

NNI

32

CONDUITS VIRTUELS

TE

Vers terminaux d'usagers

22

COM

33

VOIES VIRTUELLES

RESEAU ATM

# FIG.2

| GFC | VPI | | |
|-----|-----|---|---|
| VPI | | VCI | |
| VCI | | | |
| VCI | | "110" = PTI | CLP |
| HEC | | | |

EN-TETE
(5 octets)

| MTP | | | |
|-----|---|---|---|
| MF | | | |
| DDFL | | | |
| | | TIM | |
| TIM | | GIG | |
| GIG | | CPI | |
| CPI | | | |

CHAMP
D'INFORMATION
(48 octets)

## *FIG.3*

## FIG.4